# EUROPÄISCHE PATENTSCHRIFT

(11) **EP 3 435 339 B1**
(45) Veröffentlichungstag und Bekanntmachung des Hinweises auf die Patenterteilung: **25.11.2026**
(21) Anmeldenummer: 18180771.0
(22) Anmeldetag: 29.06.2018
(51) Int. Cl.: G01D 4/00, G07C 9/00, H04L 9/32, G06F 21/44, G07C 3/00, G07C 9/20

(54) **ERFASSUNGSGERÄT, SERVICEGERÄT, GEBÄUDEKOMMUNIKATIONSSYSTEM UND VERFAHREN ZUM AUTORISIEREN EINES SERVICEGERÄTS AN EINEM ERFASSUNGSGERÄT**
ACQUISITION DEVICE, SERVICE UNIT AND METHOD FOR AUTHORISING A SERVICE UNIT ON AN ACQUISITION DEVICE
APPAREIL DE DÉTECTION, APPAREIL DE SERVICE, SYSTÈME DE COMMUNICATION DE BÂTIMENT ET PROCÉDÉ D'AUTORISATION D'UN APPAREIL DE SERVICE SUR UN APPAREIL DE DÉTECTION

(30) Priorität: 26.07.2017 DE 102017116937
(43) Veröffentlichungstag der Anmeldung: 30.01.2019
(73) Patentinhaber: Techem Energy Services GmbH, 65760 Eschborn (DE)
(72) Erfinder: Simon, Winfried, 64579 Gernsheim (DE); Wurl, Andreas, 61462 Königstein (DE)
(74) Vertreter: Keil & Schaafhausen Patentanwälte PartGmbB

(56) Entgegenhaltungen:
- DE-B4- 102011 088 550
- US-A- 5 715 390
- US-A1- 2011 004 764
- CAKULEV G SUNDARAM I BROUSTIS ALCATEL LUCENT V: "IBAKE: Identity-Based Authenticated Key Exchange; rfc6539.txt", IBAKE: IDENTITY-BASED AUTHENTICATED KEY EXCHANGE; RFC6539.TXT, INTERNET ENGINEERING TASK FORCE, IETF; STANDARD, INTERNET SOCIETY (ISOC) 4, RUE DES FALAISES CH- 1205 GENEVA, SWITZERLAND, 8 March 2012 (2012-03-08), pages 1 - 13, XP015081456
- PENEV TSVETAN: "Identity Based Public Key Infrastructures", BACHELOR THESIS, 1 August 2005 (2005-08-01), Darmstadt, XP055511350, Retrieved from the Internet <URL:https://pdfs.semanticscholar.org/df2f/c53f2818bc79972d8d0c25426fb27d2fd9e8.pdf> [retrieved on 20181001]

## Beschreibung

Die Erfindung betrifft ein insbesondere elektronisches Erfassungsgerät zum Erfassen (insbesondere Messen und/oder Akkumulieren) einer Verbrauchsgrö-βe mit den Merkmalen des Oberbegriffs des Anspruchs 1, bspw. eines momentanen Verbrauchs der Verbrauchsgröße, und/oder einer sonstigen Gebäudemessgröße, bspw. einer Messgröße in einem Raum.

Das Erfassungsgerät kann insbesondere ein Verbrauchserfassungsgerät, ein Sensorgerät, ein Anzeigegerät und/oder ein sonstiges Teilnehmergerät eines Gebäudekommunikationssystems sein. Als Verbrauchserfassungsgerät kommt insbesondere ein Gerät zum Erfassen von abgegebener Wärme oder Kälte (bspw. ein Heizkostenverteiler oder Wärmemengenzähler), von Strom, von Gas und/oder von Elektrizität als Verbrauchsgröße in Frage. Ein Sensorgerät ist insbesondere ein Gerät zum Erfassen einer Gebäudemessgröße im Innen- oder Außenbereich eines Gebäudes, insbesondere einer Raumluft- oder Außentemperaturtemperatur, einer Raumluftfeuchte, einer Wandtemperatur, zum Erfassen von Rauchpartikeln in der Raumluft (d.h. einem Rauchwarnmelder als Sensorgerät) und/oder zum Erfassen mindestens einer anderen Messgröße der Raumluft. Als Anzeigegerät wird - im Sinne eines Erfassungsgeräts - auch ein separates Gerät ohne Sensoreinrichtung verstanden, das eine Einrichtung zur Anzeige (im Sinne eines Erfassens) der durch ein Verbrauchsmess- oder Sensorgerät erfasste Messgröße aufweist. Ein Anzeigegerät steht zumeist in einer Funkkommunikation mit den zugehörigen Verbrauchserfassungs- und/oder Sensorgeräten und kann neben der Anzeige auch separate Geräte zur Funkkommunikation umfassen. Anzeigegeräte in diesem Sinne umfassen daher auch Datensammler und/oder Router bzw. sonstige Teilnehmergeräte eines Gebäudekommunikationssystems.

Ferner betrifft die Erfindung ein Servicegerät zum Zugriff auf das Erfassungsgerät nach dem Oberbegriff des Anspruchs 7, insbesondere Verbrauchserfassungs-, Sensor- und/oder Anzeigegerät, durch Empfangen von Daten von und/oder Senden von Daten an das Erfassungsgerät (bspw. bei der Inbetriebnahme, der Auslesung und/oder einem späteren Service an dem Erfassungsgerät) sowie ein Gebäudekommunikationssystem (insbesondere Verbrauchserfassungssystem) mit mindestens einem solchen Erfassungsgerät und mindestens einem solchen Servicegerät. Ferner bezieht sich die Erfindung auf ein Verfahren zum Autorisieren des Servicegeräts an dem Erfassungsgerät.

Entsprechend weist ein erfindungsgemäßes Erfassungsgerät, das im Folgenden auch als Endgerät (insbesondere im Sinne eines Teilnehmergeräts des installierten Gebäudekommunikationssystems) bezeichnet wird, gemäß dem Oberbegriff des Anspruchs 1 eine Einrichtung zum Messen des Verbrauchs einer Verbrauchsgröße (bspw. Wärme, Wasser oder dgl.), zum Messen einer Gebäudemessgröße (bspw. Temperatur, Rauchpartikel in der Raumluft oder dgl.) und/oder der Anzeige dieser gemessen Größen auf. Dies wird zusammengefasst als Erfassung der jeweiligen Größe bezeichnet, für die das Erfassungsgerät eine jeweils geeignet eingerichtete Einrichtung aufweist.

Ferner weist das Erfassungsgerät mindestens eine Kommunikationsschnittstelle zur Kommunikation mit einem Servicegerät auf, wobei das Erfassungsgerät dazu eingerichtet ist, zum Autorisieren des Servicegeräts über mindestens eine Kommunikationsschnittstelle einen Autorisierungscode von dem Servicegerät zu empfangen, zu überprüfen und in Abhängigkeit von einem Ergebnis der Überprüfung den Zugriff des Servicegeräts zu erlauben oder zu verweigern.

Ein zugehöriges Servicegerät nach dem Oberbegriff des Anspruchs 8 ist mit einer Kommunikationsschnittstelle zum direkten oder indirekten (bspw. über Zwischensendeempfänger oder ein anderes zusätzliches Kommunikationsgerät) Empfangen von Daten von einem und/oder Senden von Daten an ein Verbrauchserfassungsgerät über eine Kommunikationsschnittstelle des Erfassungsgeräts (Endgerät) und mit einer Recheneinheit ausgestattet, die dazu eingerichtet ist, zur Autorisierung des Servicegeräts einen Autorisierungscode über die Kommunikationsschnittstellen an das Erfassungsgerät (Endgerät) zu senden. Unter einer indirekten Kommunikation ist also insbesondere auch eine Kommunikation unter Verwendung eines zusätzlichen Kommunikationsgeräts (Kommunikationstool), bspw. eines Optokopfs, zu verstehen.

Ein erfindungsgemäß vorgeschlagenes Gebäudekommunikationssystem (insbesondere ein Verbrauchserfassungssystem) nach den Merkmalen das Anspruchs 11 weist mindestens ein solches Erfassungsgerät und mindestens ein solches Servicegerät auf.

Mit diesen Geräten kann erfindungsgemäß das gemäß dem Oberbegriff des Anspruchs 12 vorgeschlagene Verfahren zur Autorisierung des Servicegeräts zum Zugriff auf das Erfassungsgerät (Endgerät) durchgeführt werden, bei dem das Servicegerät einen Autorisierungscode zur Autorisierung an das Erfassungsgerät (Endgerät) übersendet, das Erfassungsgerät (Endgerät) den Autorisierungscode überprüft und in Abhängigkeit von einem Ergebnis der Überprüfung den Zugriff des Servicegeräts auf das Erfassungsgerät (Endgerät) erlaubt oder verweigert.

Der Auslesevorgang von Verbrauchswerten aus Verbrauchserfassungsgeräten, wie beispielweise Heizkostenverteilern, Wasserzählern, Wärmezählern, Kältezählern, Stromzählern, Gaszählern, Elektrizitätszählern oder von Gerätedaten oder Zusatzinformationen (wie beispielsweise den aktuellen Batteriestatus und die erwartete Restbetriebszeit, Selbsttest-Prüfstatistiken oder aktuelle Geräteeinstellungen) von Erfassungsgeräten (Sensorgeräten einschließlich Rauchwarnmeldern, Anzeigegräten beziehungsweise anderen Endgeräten, auf die sich die Erfindung auch bezieht), wird immer weiter automatisiert. Dazu werden moderne elektronische Erfassungsgeräte verwendet, die mindestens eine Kommunikationsschnittstelle aufweisen, die (ggf. auch) als Serviceschnittstelle genutzt werden kann, um mit Hilfe eines Servicegeräts auf das Erfassungsgerät zuzugreifen. Dadurch können beispielsweise die im Verbrauchserfassungsgerät gespeicherten Verbrauchsdaten elektronisch abgelesen werden oder Gerätedaten des Erfassungsgeräts ausgelesen und/oder verändert werden. Als Servicegeräte können beispielsweise Service-Laptops, Tablet-PCs, Mobile-Computer, Smartphones oder proprietäre Geräte verwendet werden, die entweder über eine passende Kommunikationsschnittstelle verfügen oder über eine geeignete Kommunikationsverbindung bspw. drahtlos über Bluetooth oder drahtgebunden über USB mit einem Standard-Tool (Kommunikationsgerät), bspw. mit einem USB-Optokopf für eine optische ZVEI-Schnittstelle oder mit einem proprietären Tool, verbunden werden, wobei das Tool die passende Kommunikationsschnittstelle zum Erfassungsgerät (Endgerät) beinhaltet. Als Servicegeräte im Sinne der Erfindung geeignete Geräte verfügen ferner über eine Recheneinheit sowie die entsprechende, auf der Recheneinheit implementierte Software.

Insbesondere können bei einer Inbetriebnahme eines Erfassungsgeräts vor Ort, also in einer Liegenschaft, meist in der Wohnung bzw. in der gewerblichen Nutzeinheit, durch einen Servicetechniker mit Hilfe des Servicegeräts Gerätedaten ausgelesen werden und durch Zuordnung zu der jeweiligen Liegenschaft, bspw. anhand einer sogenannten Grundakte der Liegenschaft bei einem Serviceprovider, in einer Datenbank (bspw. als Teil der Stammdaten der Liegenschaft) abgelegt werden. Zu diesen Daten können die Seriennummer des End- bzw. Erfassungsgeräts, der Hersteller des Geräts, die Version der auf dem Gerät installierten Software, das Medium, dessen Verbrauch erfasst wird (Verbrauchsgröße), der Einbauort, und so weiter zählen. Weiter werden bei der Inbetriebnahme des Erfassungsgeräts am Einbauort in der Liegenschaft verschiedene Parameter geschrieben. So können beispielsweise der voreingestellte Abrechnungsstichtag durch einen neuen Stichtag ersetzt werden, ein Funkmodus (bspw. der Open Metering System (OMS)-Funk) ggf. mit kundenspezifischen Einstellungen zum Sendezeitpunkt und/oder der Sendehäufigkeit und/oder mit auswählbaren Dateninhalten ergänzt werden, mit dem das Erfassungsgerät Daten für die Ablesung aussendet, oder dergleichen. Auch das Datum und die Uhrzeit des Erfassungsgeräts kann aktualisiert oder an die Zeitzone angepasst werden. Anzumerken ist hierbei, dass ein Erfassungsgerät (Endgerät) in der Regel über eine Echtzeituhr verfügt, damit das Stichtagsereignis bzw. datum- und/oder zeitgesteuerte Ereignisse korrekt gebildet und gespeichert werden.

Des Weiteren können die Parameter gesetzt werden, die zur eigentlichen Messung erforderlich sind. Bei einem Heizkostenverteiler können beispielsweise die Kenndaten des Heizkörpers gesetzt werden. Bei Puls-auf-Funk-Konvertern, bei denen Pulse eines Verbrauchsmessgeräts an ein Funkmodul weitergeleitet werden, das dann den aus der Anzahl der Pulse berechneten Verbrauchswert weitersendet, kann die Pulswertigkeit für den Verbrauchsfortschritt gesetzt werden. Bei einem Rauchwarnmelder kann bspw. ein mindestens einzuhaltender Abstand von unmittelbar in der Nähe aufgestellten Gegenständen, bspw. einem Schrank, eingestellt werden, der eine optimale Betriebsweise zur Raucherkennung sicherstellt, wobei der Rauchwarnmelder einen Warnton oder ein Lichtsignal ausgibt, falls der Mindestabstand durch bspw. Aufbau eines neuen oder Verschieben des vorhandenen Schranks unterschritten wird.

Das korrekte Setzen dieser oder anderer notwendiger Parameter, die dem Fachmann bekannt sind, ist entscheidend für einen optimierten Betrieb des Endgeräts (Erfassungsgeräts), da ansonsten die Folgeprozesse in ihren Abläufe behindert werden könnten. Würde beispielsweise der Funkmodus nicht oder fehlerhaft gesetzt, könnte zu einem späteren Zeitpunkt die Funkablesung des Geräts nicht wie gewünscht erfolgen. Dies würde zu kostspieligen Serviceeinsätzen und/oder Kundenbeschwerden führen.

Die für das Lesen und/oder Schreiben der Daten vorgesehene Kommunikationsschnittstelle kann jedoch auch zur Manipulation des Verbrauchserfassungsgeräts missbraucht werden. Ein Nutzer einer Nutzeinheit, der als Hacker agieren würde, könnte über die Kommunikationsschnittstelle auf das Verbrauchserfassungsgerät zugreifen, um die dort gespeicherten Parameter in einem Sinne zu verändern, der die Messung des Verbrauchs oder die Erfassung anderer Gebäudemessgrößen zu seinen Gunsten beeinflusst, und dadurch andere Nutzer betrügen oder diesen schaden, im Falle von Rauchwarnmeldern ggf. sogar gefährden. Daher sind solche Schnittstellen grundsätzlich gegen einen nicht autorisierten Zugriff geschützt, und die zum Service verwendeten Autorisierungsverfahren werden geheim gehalten.

Würden die Verfahren zur Autorisierung des Zugriffs auf Endgeräte öffentlich, bspw. im Internet, könnte dies große wirtschaftliche Schäden verursachen. Auch ist es aus anderen Gründen wichtig, dass Unbefugte keinen elektronischen Zugriff auf Gerätedaten (insbesondere Parameter- oder Betriebsdaten sowie Verbrauchs- oder Sensordaten) einer Liegenschaft erlangen können.

Um sicher zu stellen, dass Unbefugte keinen Zugriff auf solche Gerätedaten erlangen können, sind in Gebäudekommunikationssystem, wie insbesondere Verbrauchserfassungssystemen, daher Autorisierungsverfahren implementiert, die den Zugriff auf das Erfassungsgerät (Endgerät) über die Kommunikationsschnittstelle absichern. Dazu sind verschiedene Systeme und Verfahren bekannt, bei denen in dem Erfassungsgerät ein Autorisierungscode hinterlegt ist, der auch dem Servicegerät bekannt ist und mit dem auf das Erfassungsgerät zugegriffen werden kann.

Oftmals erfolgt die Kommunikation über die Serviceschnittstelle, zusätzlich zur Verwendung der Autorisierungsverfahren, verschlüsselt. Dabei können die übertragenen Autorisierungscodes und/oder die Schlüssel (Keys) des Verschlüsselungsverfahrens über bspw. eine kryptografische Hashfunktion, die einen Hash-Code als Autorisierungscode erzeugt, zusätzlich abgesichert werden. Kryptografischen Hashfunktionen sind im Stand der Technik bekannt.

Zur Hinterlegung und Generierung des Autorisierungscodes zur Autorisierung des Servicegeräts sind prinzipiell zwei Vorgehensweisen bekannt. Der Autorisierungscode kann bspw. bei der Fertigung individuell für jedes Verbrauchserfassungsgerät als Zufallszahl erzeugt werden und im nicht flüchtigen Speicher (bspw. einem Flash-Speicher) des jeweiligen Verbrauchserfassungsgeräts abgelegt werden. Dazu kann beispielsweise eine (echte) Zufallszahl oder eine Pseudozufallszahl verwendet werden. Die erzeugten Autorisierungscodes aller Erfassungsgeräte werden dem Serviceprovider (bspw. durch den Fertiger des Erfassungsgeräts bspw. als elektronische, verschlüsselte Liste) zur Verfügung gestellt, und beim Serviceprovider in einer "Key-Datenbank" oder in einer anderen Datenbank (bspw. bei den Geräten in den Stammdaten der Liegenschaft) gespeichert. Muss bei der Inbetriebnahme, einem Service oder einer Auslesung durch das Servicegerät auf das Erfassungsgerät zugegriffen werden, so wird vorab der entsprechende Autorisierungscode von der Datenbank in das Servicegerät übertragen, um diesem somit den Zugriff auf das Erfassungsgerät zu ermöglichen.

Problematisch ist hierbei, dass insbesondere bei der Inbetriebnahme a priori nicht bekannt sein muss, welches Erfassungsgerät in welcher Liegenschaft und an welchem Einbauort (Wohnung und/oder Zimmer einer Wohnung) eingebaut wird. Um dies zu vermeiden werden viele Parameter erst bei der Inbetriebnahme in der Liegenschaft durch das Servicegerät gesetzt. Es würde einen sehr hohen organisatorischen Aufwand (und damit Personalkosten) bedeuten, dem Servicetechniker Erfassungsgeräte (Endgeräte) mit genau bekannten Seriennummern und damit bekannten zugehörigen Autorisierungscodes zur Verfügung zu stellen. Zwar könnten alternativ auf den Servicegeräten sämtliche in der Datenbank des Serviceproviders vorliegenden Autorisierungscodes vorgehalten werden. Dies würde jedoch eine häufige Aktualisierung der Informationen im Servicegerät voraussetzen und dadurch viel Datenverkehr (bspw. im Mobilfunk) und entsprechende Datenübertragungskosten verursachen. Außerdem könnten bei dem Verlust oder Diebstahl des Servicegeräts die Autorisierungscodes aller Endgeräte an unbefugte Personen gelangen.

Aus der US 2011/0004764 A1 ist ein Verfahren bekannt, um einen sicheren Zugriff auf ein Messgerät mit einem mobilen Auslesegerät durchzuführen. Dazu fordert das mobile Auslesegerät von einem Leitrechnersystem einen Autorisierungscode zum Zugriff auf das Messgerät an. Das Leitrechnersystem überprüft, ob dem mobilen Auslesegerät ausreichende Rechte zum Zugriff auf das Messgerät zur Verfügung stehen und übermittelt in diesem Fall eine digitale Signatur an das mobile Auslesegerät. Das mobile Auslesegerät erzeugt aus der digitalen Signatur einen Autorisierungscode und übermittelt diesen zum Zugriff an das Messgerät. Mit diesem Verfahren muss demnach vor jedem Zugriff auf ein Messgerät eine Anfrage an einen entfernten Server gesendet und gewartet werden, bis eine digitale Signatur übermittelt wird. Da in einer Liegenschaft typischerweise eine Vielzahl von Messgeräten vorhanden ist, auf die beispielsweise im Rahmen einer Inbetriebnahme zugegriffen werden muss, führt ein solches Verfahren zu einer Verlängerung der Dauer des Serviceeinsatzes und damit zu höheren Personalkosten. Außerdem muss für die Übertragung der digitalen Signatur eine Infrastruktur vorhanden sein, die hohe Kosten verursacht. Je nach Installationsort ist unter Umständen auch kein Zugriff auf den zentralen Server möglich, weil eine entsprechende kommunikationstechnische Infrastruktur fehlt oder nicht mit einer für die Datenübertragung ausreichender Güte verfügbar ist.

Aus der DE 10 2011 088 550 B4 ist ein Zugangskontrollsystem bekannt, bei dem von einem Zugangskontrollserver ein Seed-Set für ein Einmalpasswort erzeugt wird und an ein Handgerät übertragen wird, wenn dessen Benutzeridentifizierung in einem Benutzeridentifizierungssatz vorhanden ist. Das Handgerät erzeugt aus dem Seed-Set ein Einmalpasswort zur Zwei-Wege-Identifizierungsbestätigung mit einer Endgerät-Aufzeichnungsvorrichtung. Das Handgerät muss somit für jeden Zugriff auf eine Endgerät-Aufzeichnungsvorrichtung eine Verbindung zu dem Zugangskontrollserver aufbauen. Das Verfahren führt daher, insbesondere bei der Inbetriebnahme, ebenfalls zur Verlängerung der Inbetriebnahmedauer und setzt eine entsprechende Infrastruktur voraus.

Aus der EP 3 059 895 A1 ist ein Elektrizitätszähler bekannt bei dem Verbrauchsdaten mit einem Einmalschlüssel verschlüsselt und über einen unsichere Datenkanal versendet werden. Dazu besitzt der Elektrizitätszähler einen nichtflüchtigen Speicher, der einen Einmalschlüssel in Form einer Datei enthält, sowie einen Zeiger, der auf das erste nicht verwendete Byte der Schlüsseldatei zeigt. Bei jeder Verschlüsselung wird der Zeiger entsprechend weitergeschoben. Das verschlüsselte Chiffrat wird über eine Kommunikationseinrichtung an einen Gateway gesendet und über ein Netzwerk an eine entfernte Abrechnungsstelle weitergeleitet. In dieser Abrechnungsstelle wird eine identische Schlüsseldatei mit einem zugehörigen Zeiger vorgehalten. Das Chiffrat kann dann an der Abrechnungsstelle mit Hilfe der Schlüsseldatei entschlüsselt werden und der Zeiger entsprechend weiterschoben werden. Außerdem ist eine Kommunikation in Gegenrichtung vorgesehen, bei der die Verschlüsselung in der Abrechnungsstelle stattfindet und die Entschlüsselung im Elektrizitätszähler erfolgt. Da am Gateway, lediglich verschlüsselte Nachrichten weitergeleitet werden, können dort keine Nachrichten eingesehen oder ausgesendet werden. Ein direkter Zugriff auf den Elektrizitätszähler durch einen Servicetechniker ist mit diesem Verfahren vor Ort somit nicht möglich.

In einer anderen Variante können die Autorisierungscodes algorithmisch erzeugt werden. Dabei wird im Rahmen der Fertigung des Endgeräts der Autorisierungscode mit Hilfe eines (geheim gehaltenen) Algorithmus aus einigen unveränderlichen, individuellen und durch das Servicegerät bei der Inbetriebnahme ermittelbaren Daten (bspw. ablesbaren Nummern als vorher festgelegte und im Algorithmus verwendete gerätespezifische Daten des Endgeräts) berechnet und in einem nichtflüchtigen Speicher des Endgeräts hinterlegt. Der Algorithmus wird außerdem in die Servicesoftware, die auf dem Servicegerät läuft, implementiert, wodurch das Servicegerät Zugriff auf alle Endgeräte erhalten kann. Das Servicegerät kann dazu eingerichtet sein, von dem Endgerät bspw. die Seriennummer und/oder andere gerätespezifische Daten auszulesen, oder diese Daten können manuell in das Servicegerät eingegeben werden. Das Servicegerät berechnet dann mit Hilfe dieser Daten und des Algorithmus den Autorisierungscode für dieses Endgerät. Da das Servicegerät den Autorisierungscode selbständig direkt am Einbauort berechnen kann, muss dieser daher nicht schon vor dem Zeitpunkt des Einbaus und der Inbetriebnahme im Feld (am Einbauort) bekannt sein.,

Bei diesem Verfahren besteht allerdings ein gewisses Sicherheitsrisiko. Da der Algorithmus zur Berechnung des Autorisierungscodes auf jedem Servicegerät vorhanden ist und die Verwendung des Servicegeräts den Zugriff auf sämtliche Endgeräte ermöglicht, könnten bei einem Diebstahl oder Verlust des Servicegeräts Unbefugte über deren lokale Kommunikationsschnittstelle am Einbauort Zugriff auf alle Endgerätedaten erlangen. Selbst wenn lediglich der verwendete geheime Algorithmus zur Erzeugung der Autorisierungscodes öffentlich bekannt würde, beispielsweise im Internet, könnten Unbefugte mit entsprechenden Tools und Fähigkeiten auf sämtliche Endgeräte zugreifen.

Die US 2011/004764 A1 beschreibt ein Automated Meter Reading System (AMR - Automatisiertes Ablesesystem) mit einem Erfassungsgerät zur Verbrauchserfassung, das über eine Kommunikationsschnittstelle mit einem mobilen Ablesegerät ausgelesen werden kann. Es ist eine Authentifizierungsanwendung vorgesehen, bei der jedem Erfassungsgerät ein öffentlicher Schlüssel zugewiesen worden ist. Mit diesem öffentlichen Schlüssen können von dem Ablesegerät erhaltene digitale Signaturen dekodiert werden, um zu authentifizieren, dass eine Kommunikation von dem Service Provider stammt. Das mobile Ablesegerät kann das Erfassungsgerät, zu dem ein Zugang erhalten werden soll, bspw. anhand einer empfangen Geräte **ID** identifizieren und über eine sichere Datenverbindung zu einem Server dynamisch eine Autorisierung (im Sinne einer digitalen Signatur) von dem Server anfordern. Der Server überprüft die Zugriffsberechtigung, erstellt unter Verwendung des privaten Schlüssels eine Signatur und überträgt an das mobile Ablesegerät. Mit der Signatur kann sich das mobile Ablesegerät bei dem Erfassungsgerät authentifizieren und erhält Zugriff auf die gewünschten Daten. Falls das mobile Ablesegerät keinen Zugriff auf den Server hat, kann ein Prozess zur Stapel-Autorisierung erfolgen, bei dem das Ablesegerät sich im Vorfeld digitale Signaturen von dem Server abholt und diese temporär speichert.

US 5 715 390 A offenbart einen Elektrizitätszähler mit einem geschützten Freigabeschema für die Aktivierung von Zähleroptionen und Upgrades, die jeweils gesondert angefordert und mit einem Passwort verifiziert werden müssen. Die entsprechenden Optionen oder Upgrades werden werksseitig im Zähler abgespeichert und können durch entsprechende Befehle einzeln aktiviert werden. Eine eindeutige Seriennummer des Zählers sowie ein aus Seriennummer und einem Softwareschlüssel über einen Algorithmus generiertes Passwort sind ebenfalls im Zähler hinterlegt. Soll durch ein Servicegerät eine Option aktiviert werden, wird zusammen mit dem entsprechenden Aktivierungsbefehl ein Authentifizierungspasswort an den Zähler gesendet. Dieses Authentifizierungspasswort wird zuvor generiert, indem das Servicegerät die Seriennummer des Zählers ausliest und zusammen mit einem Softwareschlüssel über einen Algorithmus verarbeitet. Das so generierte Authentifizierungspasswort wird mit dem im Zähler hinterlegten Passwort verglichen, um die Berechtigung des Servicegeräts zu prüfen, bevor der Aktivierungsbefehl ausgeführt wird. Um zu gewährleisten, dass nur die erworbene Anzahl Upgrades aktiviert werden kann, verfügt das Servicegerät auch über eine Zähleinrichtung, deren Wert jedes Mal erniedrigt wird, wenn ein Upgrade aktiviert wurde.

Cakulov et. al., "IBAKE: Identity-Based Authenticated Key Exchange", IETF, Internet Society ISOC, März 2012, betrifft Identity-Based Encryption (IBE)-Protokolle, die eine Vereinfachung der Infrastrukturanforderungen über einen Private-Key-Generator (PKG) bei gleicher Flexibilität ermöglichen. Das vorgeschlagene Identity-Based Authenticated Key Exchange (IBAKE)-Protokoll erfordert keine gesonderte Schlüsselhinterlegung und bietet zusätzlich eine gegenseitige Authentifizierung sowie eine perfekte Geheimhaltung, indem sich zwei oder mehr Teilnehmer gegenseitig authentifizieren und sich über das Schlüsselmaterial einigen, das zur Sicherung der zukünftigen Kommunikation verwendet wird.

DE 10 2011 088 550 B4 beschreibt ein Zugangskontrollsystem und ein Zugangskontrollverfahren mittels einer Zwei-Wege-Authentifizierung.

Es ist daher Aufgabe der vorliegenden Erfindung ein Gebäudekommunikationssystem, insbesondere ein Verbrauchserfassungssystem, bereitzustellen, bei dem der Zugriff auf die Erfassungsgeräte bei der Inbetriebnahme einfach möglich ist, ohne die genaue Identität der jeweils zu installierenden Erfassungsgerätes a priori zu kennen, und das gleichzeitig die genannten Sicherheitsrisiken vermeidet.

Die Aufgabe wird gelöst durch das erfindungsgemäße Erfassungsgerät nach Anspruch 1, das erfindungsgemäße Servicegerät nach Anspruch 7 und das Gebäudekommunikationssystem nach Anspruch 11 sowie durch das erfindungsgemäße Autorisierungsverfahren nach Anspruch 12.

Ein erfindungsgemäßes Erfassungsgerät der eingangs genannten Art weist vorzugsweise eine Recheneinheit auf, die dazu eingerichtet ist, in einem ersten Zugriffsmodus einen ersten Autorisierungscode unter Verwendung eines in dem Erfassungsgerät abgespeicherten ersten Geheimnisses zu überprüfen, wobei das erste Geheimnis aus gerätespezifischen Daten des Erfassungsgeräts mittels eines (geheimen) Algorithmus erzeugbar ist, in einem zweiten Zugriffsmodus einen zweiten Autorisierungscode unter Verwendung eines in dem Erfassungsgerät abgespeicherten zweiten Geheimnisses zu überprüfen, wobei das zweite Geheimnis auf einer Zufallszahl basiert, und abhängig von durch die Recheneinheit feststellbaren Bedingungen zwischen dem ersten Zugriffsmodus und dem zweiten Zugriffsmodus umzuschalten.

Die für einen Servicezugriff verwendete (zumindest mitverwendete) Kommunikationsschnittstelle eines Erfassungsgeräts, die zur Vor-Ort-Kommunikation mit einem Servicegerät verwendet wird, besitzt üblicherweise nur über eine sehr begrenzte Reichweite. Diese kurze Reichweite ist ausreichend, da sich der Servicetechniker unmittelbar vor dem Gerät am Installationsort bspw. in der Nutzeinheit oder in einem Heizungskeller befindet. Als Schnittstelle mit einer geringen Reichweite sind dem Fachmann eine Near Field Communication (NFC) bspw. bei einem Smartphone, eine Infrarotschnittstelle als optische Kommunikationsschnittstelle, die proprietär oder gemäß ZVEI-Standard ausgebildet sein kann, eine induktive Kommunikationsschnittstellen oder dergleichen bekannt. Grundsätzlich kann die Kommunikationsschnittstelle aber auch als kabelgebundene Schnittstelle, bspw. als M-Bus-Schnittstelle, ausgeführt sein.

Das Erfassungsgerät weist erfindungsgemäß zwei Geheimnisse auf, die jeweils einem der beiden Zugriffsmodus zugeordnet sind. Das erste Geheimnis ist dabei aus vorab ausgewählten gerätespezifischen Daten des Erfassungsgeräts mittels eines (geheim gehaltenen) Algorithmus berechenbar und kann beispielsweise im Rahmen der Fertigung in einem nichtflüchtigen Speicher, bspw. einem Flash-Speicher, des Erfassungsgeräts bzw. dessen Recheneinheit abgespeichert worden sein.

Das zweite Geheimnis basiert hingegen auf einer Zufallszahl und kann ebenfalls beispielsweise im Rahmen der Fertigung auf einem nichtflüchtigen Speicher des Erfassungsgeräts abgespeichert worden sein.

Die Geheimnisse können beispielsweise als 128 Bit Key oder als 8 Byte Vektor (d.h. allgemeiner als ein digital speicherbares Zeichen) ausgebildet sein und in einem nichtflüchtigen Speicher, bspw. Flash-Speicher des Erfassungsgeräts, abgelegt sein. Insbesondere können die einmal gespeicherten Geheimnisse vorzugsweise nicht verändert werden. Bei den Geheimnissen kann es sich beispielsweise einfach um eine Zahlenfolge oder um einen Basisschlüssel eines Verschlüsselungssystems handeln.

Die Recheneinheit des Erfassungsgeräts ist dazu eingerichtet, bei einem ersten Zugriff durch das Servicegerät (insbesondere bei einer Inbetriebnahme) gemäß dem ersten Zugriffsmodus zu verfahren und nach einem ersten Zugriff auf den zweiten Zugriffsmodus umzuschalten. Dies kann entweder direkt nach dem ersten Zugriff oder nach einer vorgegebenen Anzahl von Zugriffen erfolgen. Alternativ kann das Erfassungsgerät nach dem ersten Zugriff, der vorzugsweise bei der Inbetriebnahme stattfindet, eine vorher festgelegte Zeitdauer im ersten Zugriffsmodus verbleiben und erst dann auf den zweiten Zugriffsmodus umschalten. Beispielsweise kann die Umschaltung von dem ersten Zugriffsmodus auf den zweiten Zugriffsmodus am Tageswechsel nach dem ersten Zugriff erfolgen. Alternativ kann das Umschalten erfolgen, sobald eine Inbetriebnahme vollständig abgeschlossen ist, wenn also beispielsweise sämtliche für den (optimalen oder vorgesehenen) Betrieb notwendigen Parameter gesetzt wurden und/oder das Servicegerät ein "Fertig"-Kommando gesendet hat. Alle die vorgenannten Varianten stellen Bedingungen dar, die bzw. deren Eintreten durch die Recheneinheit des Erfassungsgeräts feststellbar sind.

Erfindungsgemäß erfolgt damit die Inbetriebnahme nach einem ersten Zugriffmodus, der mit einem gemeinsamen ersten Geheimnis für alle Erfassungsgeräte arbeitet und damit - unter Tolerierung der Gefahr, dass das eine Geheimnis auf irgendeine Weise bekannt wird - einen einfachen (aber dennoch abgesicherten) Zugang für die Inbetriebnahme bietet.

Erst danach, wenn die Erfassungsgeräte individuell konfiguriert sind und bspw. konkrete Messdaten aufnehmen oder als Erfassungsgeräte produktiv arbeiten, wird auf einen individuellen und Zufallszahl-basierten Zugriff nach dem zweiten Zugriffsmodus umgeschaltet, der jedes Erfassungsgerät individualisiert absichert.

Zum Zugriff auf das Erfassungsgerät in dem zweiten Zugriffsmodus darf der Autorisierungscode erfindungsgemäß nicht aus - grundsätzlich bekannten und/oder ablesebaren - gerätespezifischen Daten berechnet werden, da das zweite Geheimnis auf einer Zufallszahl basieren soll, die sich dadurch auszeichnet, dass der zu der Zufallszahl führende Zustand grundsätzlich nicht mehr rekonstruierbar ist.

Das erfindungsgemäße Erfassungsgerät vermeidet somit die Nachteile der bekannten Autorisierungsverfahren und verbindet die Vorteile der algorithmischen Berechnung von Autorisierungscode mit den Vorteilen zufällig erzeugter Autorisierungscodes.

Insbesondere kann mit dem Servicegerät bei der Inbetriebnahme auf jedes Erfassungsgerät zugegriffen werden, ohne dass das Servicegerät zuvor gerätespezifische Autorisierungscodes erhalten müsste oder während der Inbetriebnahme eine Verbindung zu einem Server aufbauen müsste. Die Sicherheitsanforderungen vor und während der Inbetriebnahme sind wesentlich geringer als beim dauerhaften Verbleib, da vor der Inbetriebnahme die Möglichkeiten zur Manipulation und der "Nutzen" einer Manipulation deutlich eingeschränkt sind, da sich nur die "Werkseinstellungen" auf dem Gerät befinden und das Erfassungsgerät seine Messfunktionen und/oder die Funkaussendung in der Regel noch nicht aktiviert hat. Ein Zugriff mit dem weniger sicheren, algorithmisch erzeugten Code ist nur während der Inbetriebnahme möglich, bei der in der Regel der Servicetechniker vor dem Gerät anwesend ist. Durch die Verwendung von algorithmisch erzeugten Autorisierungscodes bei der Inbetriebnahme wird der Verwaltungsaufwand bei der Installation von Erfassungsgeräten minimiert. Gleichzeitig wird durch die Umschaltung auf einen Zugriffsmodus mit zufälligen Autorisierungscodes verhindert, dass mit einem Servicegerät von Unbefugten auf sämtliche bereits in Betrieb befindliche Erfassungsgeräte zugegriffen werden kann.

Insbesondere wird die Umschaltung selbständig von dem Erfassungsgerät gesteuert, nämlich indem das Eintreten bestimmter Bedingungen durch das Erfassungsgerät festgestellt wird. Das Servicegerät muss dann keine diesbezügliche Logik enthalten und ist somit einfacher gestaltbar.

In einer bevorzugten Ausführungsform der Erfindung ist die Recheneinheit des Erfassungsgeräts dazu eingerichtet, automatisch von dem ersten Zugriffsmodus auf den zweiten Zugriffsmodus umzuschalten. Insbesondere kann die Recheneinheit direkt nach Abschluss der Inbetriebnahme oder am ersten (oder späteren definierten) Tageswechsel automatisch auf den zweiten Zugriffsmodus umschalten. Die feststellbare Bedingung liegt in dieser Ausführungsform also darin, dass das Erfassungsgerät den aktuellen Betriebszustand eigenständig erkennt, bspw. dadurch, dass im Rahmen einer Inbetriebnahme die Information ausgewertet wird, dass "zum ersten Mal" durch ein Servicegerät zugegriffen wird. Dies kann bspw. durch eine Flag oder das Hinterlegen einer ID des Servicegeräts, das die Installation durchführt, erfolgen. Bei mehreren erlaubten Zugriffen am Tag der Inbetriebnahme kann ein solcher Mehrfachzugriff dann bspw. auch auf ein bestimmtes Servicegerät begrenzt werden, bspw. dasjenige, das die erste Inbetriebnahme durchgeführt hat. Ebenso ist es möglich, dass anhand eines speziellen Ablaufs bei der Durchführung der Kommunikationsschritte dies als "Inbetriebnahme-oder Service- Betriebszustand" erkannt wird, und der erste Zugriffsmode dann automatisch eingestellt wird. Zusätzlich kann auf eine weitere Bedingung geprüft werden, bspw. ob eine mechanische Sicherung (Plombe) am Erfassungsgerät, geöffnet ist.

In einer weiteren bevorzugten Ausführungsform der Erfindung ist die Recheneinheit des Erfassungsgeräts dazu eingerichtet, von dem ersten Zugriffsmodus auf den zweiten Zugriffsmodus umzuschalten, wenn das Erfassungsgerät einen Umschaltbefehl von dem Servicegerät empfängt. Die Umschaltung wird somit erst durch das Servicegerät initiiert. Damit ist es möglich, in besonderen Fällen (bspw. auf Kundenwunsch) die automatische Umschaltung zu deaktivieren und somit ausschließlich bei dem ersten Zugriffsmodus zu verbleiben. Dies kann vorgesehen sein, wenn bspw. der zentrale Server vorübergehend oder dauerhaft das zweite Zugriffsverfahren nicht unterstützt oder nicht erreichbar ist. Darüber hinaus ist damit ein schrittweiser Übergang von einem Autorisierungsverfahren mit lediglich algorithmisch erzeugten Autorisierungscodes zu dem verbesserten, erfindungsgemäßen Verfahren möglich. Insbesondere können mehrere Erfassungsgerätegenerationen (Endgerätegenerationen) mit und ohne die Funktion zweier verschiedener Zugriffmodus auch parallel betrieben werden, ggf. sogar in derselben Liegenschaft.

Die Umschaltung durch das Servicegerät lässt sich auch mit der automatischen Umschaltung kombinieren, sodass die Umschaltung sowohl vom Servicegerät als auch von der Recheneinheit des Erfassungsgeräts selbst initiiert werden kann. Beispielsweise kann ein Servicetechniker nach abgeschlossener Inbetriebnahme sämtlicher Erfassungsgeräte einer Liegenschaft vor dem Verlassen der Liegenschaft (bspw. mit einem Funksignal, das das Servicegerät aussendet) die Umschaltung auf den zweiten Zugriffsmodus initiieren. Damit ist ein Zugriff mittels des ersten Zugriffsmodus nur während der Anwesenheit des Servicetechnikers in der Liegenschaft möglich, der so kontrollieren kann, dass sich Unbefugte keinen Zugriff auf die Erfassungsgeräte verschaffen können. Um sicherzustellen, dass eine Umschaltung auch stattfindet, wenn der Servicetechniker die Umschaltung nicht erfolgreich mittels des Servicegeräts initiiert, kann die Recheneinheit dazu eingerichtet sein, spätestens am Tageswechsel nach einem ersten Zugriff auf das Erfassungsgeräts durch ein Servicegerät den Zugriffsmodus automatisch umzuschalten. In Erfassungsgeräten, die keinen Funkempfänger beinhalten, kann durch die Recheneinheit des Erfassungsgeräts die zeitgesteuerte Umschaltung wirksam werden. Bei Erfassungsgeräten mit einem Funkempfänger kann der Empfang des Steuersignal des Servicegerätes die Umschaltung auslösen. Ein gemeinsamer Betrieb von Erfassungsgeräten mit und ohne Funkempfänger ist somit möglich.

In einer weiteren bevorzugten Ausführungsform der Erfindung ist die Recheneinheit des Erfassungsgeräts dazu eingerichtet, durch eine Hardwaremaßnahme (bspw. ein "mechanischen Eingriff") von dem ersten Zugriffsmodus auf den zweiten Zugriffsmodus umzuschalten. Dies kann beispielsweise durch das Setzen einer Kurzschluss-Brücke (bspw. eines Jumpers) erfolgen. Damit kann der Zugriff auf das Verbrauchserfassungsgerät in bestimmten Situationen, wie zur Reparatur oder für Qualitäts-Sicherungs-Untersuchungen (Stichproben oder bei Fehlfunktion des Erfassungsgeräts) vereinfacht werden. Die HardwareMaßnahme kann vorzugsweise nur bei geöffnetem Gehäuse und gebrochenem Gerätesiegel bzw. einer gebrochenen Gerätplombe durchgeführt werden, bspw. während der Installation und somit vor dem Anbringen der Geräteplombe durch den Servicetechniker oder im Vor-Ort-Servicefall vor dem Erneuern der Geräteplombe.. Durch die Durchführung einer Hardwaremaßnahme kann ggf. auch ein Rücksetzen des Gerätes auf Werkseinstellungen durchgeführt werden, so dass das Erfassungsgerät den Auslieferungszustand annimmt und somit der Zugriff mittels des ersten Zugriffsmodus wieder möglich ist.

Erfindungsgemäß kann das Erfassungsgerät gemäß einer möglichen Ausführungsform dazu eingerichtet sein, die gerätespezifischen Daten, insbesondere die eindeutige Geräte-Identifikationsnummer (Geräte-ID), des Erfassungsgeräts unverschlüsselt zu übermitteln. Dazu können die gerätespezifischen Daten auf dem Erfassungsgerät frei ablesbar aufgebracht (bspw. als Text oder QR-Code aufgedruckt) und in das Servicegerät einlesbar oder eingebbar oder durch das Servicegerät scanbar bzw. erfassbar sein. Hierdurch können manuelle oder teilmanuelle Eingaben der gerätespezifischen Daten erreicht werden, die nur vor Ort, also in der Nutzeinheit, erfassbar sind. Die Übermittlung der gerätespezifischen Daten kann auch durch Aussendung von Beacon-Signalen bspw. über die Kommunikationsschnittstelle zu dem Servicegerät oder als Nahbereichsfunksignal erfolgen. Die Geräte-ID kann zur Identifikation verwendet werden, da diese bei der Herstellung zugewiesen und für jedes Erfassungsgerät (Endgerät)gerät eindeutig festgelegt wird.

Damit kann das zweite, auf einer Zufallszahl basierende Geheimnis während der Herstellung des Erfassungsgeräts erzeugt und sowohl in der Recheneinheit des Erfassungsgeräts als auch in einer zentralen Key-Datenbank, die bspw. auf einem zentralen Server implementiert ist, gespeichert werden bzw. worden sein. Über die eindeutige Geräte-ID sind die zweiten Geheimnisse in der zentralen Datenbank mit einem eindeutig identifizierbaren Gerät verknüpft.

Die Zufallszahl kann bspw. auf einem Computer (im Sinne einer beliebigen Recheneinheit) extern erzeugt worden und auf das Erfassungsgerät aufgespielt, d.h. zur Speicherung an das Erfassungsgerät übertragen, worden sein. Ferner kann die Zufallszahl ergänzend oder alternativ auf einem aktuellen Datum (Tag, Monat, Jahr und/oder Uhrzeit) oder alternativ auf Teilen (bspw. Tag+Monat) des aktuellen Datums basieren, zu dem das erste Geheimnis erzeugt worden ist. Die Zufallszahl sollte erfindungsgemäß eine echte Zufallszahl in dem Sinne sein, dass sie auf einer bei der Erzeugung vorhandenen, später nicht mehr rekonstruierbaren Information beruht. Dies verhindert, dass das zweite Geheimnis durch einen Algorithmus rekonstruiert werden kann, selbst wenn dieser Algorithmus bekannt wäre. In diesem Sinne kann auch eine Pseudo-Zufallszahl eine echte Zufallszahl sein, wenn die für einen Algorithmus der Pseudo-Zufallszahl verwendeten Eingangsgrößen nicht rekonstruiert werden können.

In einer weiteren bevorzugten Ausführungsform der Erfindung kann das erste Geheimnis und/oder das zweite Geheimnis mit mehreren Teilgeheimnissen verbunden sein bzw. diese aufweisen. Die zwei oder mehr Teilgeheimnisse bilden dann den gesamten Autorisierungscode und können beliebig angeordnet sein, oder sie bilden mehrere getrennt abgespeicherte Autorisierungscodes als "Menge an Autorisierungscodes". Zur Verbesserung der Sicherheit können die Geheimnisse und/oder die Teilgeheimnisse und/oder der der gesamte Autorisierungscode über eine kryptografische Hash-Funktion zusätzlich abgesichert sein bzw. werden.

Die "Teil-Autorisierung", also der Zugriff nur auf bestimmte Datenbereiche und/oder Funktionen des Erfassungsgeräts, kann dann über die jeweiligen Teilgeheimnisse, die in dem Autorisierungscode vorhanden sind, gezielt eingeschränkt sein bzw. werden. Damit kann gesteuert werden, dass ein Servicegerät nicht auf alle implementierten Funktionen der Kommunikationsschnittstelle zugreifen kann. Beispielsweise kann dann zwischen dem Zugriff auf Produktionsfunktionen, die zur Gerätefertigung benötigt werden und die für die Funktion des Geräts grundlegende Datenbereiche beschreiben (bspw. die Parametereinstellungen des Erfassungsgerätefunkchips), und Funktionen zur Inbetriebnahme, die nur die für den Betrieb vor Ort notwendigen Parameter in das Erfassungsgerät schreiben können, unterschieden werden. Dabei kann sowohl mit dem ersten Zugriffsmodus als auch dem zweiten Zugriffsmodus zugegriffen werden, und dennoch kann die Autorisierung zur Ausführung für verschiedene Funktionen unterschiedlich gestaltet werden.

Erfindungsgemäß kann vorgesehen und implementiert sein, dass zum zweiten Autorisierungscode weitere Sicherheitselemente übertragen werden, wie bspw. ein nachfolgend noch genauer erläutertes Token mit/ohne einem Gültigkeitszeitraum für den zweiten Autorisierungscode (bspw. in Form eines Anfangsdatums und/oder eines Enddatums), eine Gerätetypidentifikation des Servicegeräts und/oder das vorstehend schon erläuterte Teilgeheimnis. Diese Informationen können bei der Überprüfung der Autorisierung des Servicegeräts von dem Erfassungsgerät mit ausgewertet werden, so dass bspw. ein selektiver Zugriff eines Servicegeräts (zeitselektiv, d.h. ein zeitlich begrenzter Zugriff, und/oder inhaltsselektiv, d.h. beschränkt auf bestimmte Speicherbereiche und/oder Funktionen des Erfassungsgeräts)auf das Erfassungsgerät ermöglicht wird.

Dem zweiten Geheimnis kann ein in dem Erfassungsgerät bekanntes, insbesondere gespeichertes und/oder ableitbares Token zugeordnet sein, wobei die Recheneinheit des Erfassungsgeräts dazu eingerichtet ist, bei der Überprüfung des zweiten Autorisierungscodes das zugeordnete Token zu verwenden. Das Token kann ein individuell für das Erfassungsgerät gespeichertes Geheimnis sein - ähnlich wie das zweite Geheimnis. Alternativ kann das Token auch ein in allen Systemen identisch verwendetes und somit allen Servicegeräten "bekanntes" Geheimnis sein.

Ein Token (auch Security-Token) ist im Stand der Technik als ein Objekt oder ein Element (meistens ein OTP-Generator (OTP = One-Time-Password)) bekannt, das eine stetig wechselnde zeitlich begrenzt gültige Zahlen- und/oder Zeichenkombination ist und daher einen zeitlich begrenzten Zugriff ermöglicht.

Erfindungsgemäß ist es auch möglich, den ersten Autorisierungscode mit dem ersten Geheimnis zu verschlüsseln und entsprechende weitere Informationen in den ersten Autorisierungscode aufzunehmen und diese in der beschriebenen Weise bei der Autorisierung zu verwenden.

Erfindungsgemäß bezieht sich die vorgeschlagene Lösung auch auf ein Servicegerät der eingangs genannten Art, bei dem vorgesehen ist, dass für einen Zugriff auf das Erfassungsgerät mit einem ersten Zugriffsmodus ein Algorithmus zur Erzeugung eines in dem Erfassungsgerät abgespeicherten ersten Geheimnisses in der Recheneinheit des Servicegeräts implementiert ist. Die Recheneinheit des Servicegeräts ist dann dazu eingerichtet, aus gerätespezifischen Daten des Verbrauchserfassungsgeräts mittels des (in beiden Geräten bekannten, grundsätzlich aber geheim gehaltenen) Algorithmus den ersten Autorisierungscode zu erzeugen und diesen an das Erfassungsgerät zu senden.

Für einen Zugriff auf das Erfassungsgerät mit einem zweiten Zugriffsmodus ist erfindungsgemäß ein zweiter Autorisierungscode auf dem Servicegerät speicherbar (d.h. in der Recheneinheit in dem Sinne, dass die Recheneinheit auf den gespeicherten Autorisierungscode zugreifen kann). Die Recheneinheit des Servicegeräts ist dazu eingerichtet, den gespeicherten zweiten Autorisierungscode an das Erfassungsgerät zu senden, um einen Zugriff entsprechend dem zweiten Zugriffsmode aufzubauen.

In dem Servicegerät ist für den Zugriff auf das Erfassungsgerät also der Algorithmus zur Erzeugung des ersten Geheimnisses implementiert. Der Autorisierungscode kann im einfachsten Fall identisch mit dem ersten Geheimnis sein, sodass eine besonders einfache Überprüfung des Autorisierungscodes im Erfassungsgerät möglich ist.

Das Servicegerät ist dazu eingerichtet, den zweiten Autorisierungscode von einem zentralen zur Geheimnisverwaltung eingerichteten Server (mit einer Datenbank) zu empfangen bzw. zu laden. Der zentrale Server zur Geheimnisverwaltung kann beispielsweise ein dafür vorgesehener Server des Serviceproviders sein, auf dem in einer Key-Datenbank oder der Datenbank mit den Liegenschaftsstammdaten die mittels einer Zufallszahl erzeugten zweiten Geheimnisse zu jedem über die gerätespezifischen Daten identifizierbaren Erfassungsgerät abgelegt bzw. gespeichert sind. In diesem Server kann unter Verwendung des zweiten Geheimnisses ein Autorisierungscode für das Erfassungsgerät generiert und dem Servicegerät zur Verfügung gestellt werden. Das Servicegerät sendet dann den empfangenen Autorisierungscode an das Erfassungsgerät weiter, um sich an diesem für einen Zugriff zu autorisieren.

Ferner kann die Recheneinheit des Servicegeräts eine Erfassungs- oder Eingabeeinrichtung aufweisen, welche dazu eingerichtet ist, die unverschlüsselt übermittelten gerätespezifischen Daten des Erfassungsgeräts in die Recheneinheit einzugeben. Dies kann eine Benutzerschnittstelle zur manuellen Eingabe (Taste, Scanner, Kamera oder dergleichen) sein. Derartige Benutzerschnittstellen sind in vielen Mobilgeräten, wie Smartphones, mobile Computer, Tablett-PCs oder dergleichen, schon vorhanden. Nach Installation einer entsprechenden Software (bspw. einer Service-App) können diese dann als Servicegeräte verwendet werden. Auch ein Empfang von durch das Erfassungsgerät ausgesendeten Beacon-Signalen mit den unverschlüsselten gerätespezifischen Daten ist wie bereits beschrieben zur Eingabe dieser erfassungsgerätspezifischen Daten und für die Ermittlung des ersten Autorisierungscodes möglich. Ferner ist ein Scannen oder Erfassen von gerätespezifischen Daten über eine optische Aufnahmeeinrichtung (Scanner, Digitalkamera oder dgl.) des Servicegeräts möglich.

Auch kann der zweite Autorisierungscode mit dem zweiten Geheimnis verschlüsselt sein und weitere Informationen enthalten. Entsprechendes gilt für den ersten Autorisierungscode.

In einer weiteren bevorzugten Ausführungsform der Erfindung kann der zweite Autorisierungscode aus dem zweiten Geheimnis abgeleitet sein, sodass in dem zweiten Autorisierungscode das zweite Geheimnis nicht selbst enthalten ist und/oder aus diesem bestimmt werden kann. Beispielsweise könnte die Ableitung von der Zahl der Zugriffe oder vom Zeitpunkt des Zugriffs abhängen. Dadurch wird in dem Servicegerät niemals das zweite Original-Geheimnis vorgehalten, sondern lediglich abgeleitete, zeitlich oder anderweitig begrenzt gültige Autorisierungscodes. Dadurch ist selbst bei einem Verlust oder Diebstahl des Servicegeräts sichergestellt, dass nach Ablauf des Autorisierungscodes Unbefugte keinen Zugriff auf das Verbrauchserfassungsgerät haben.

In einer besonders bevorzugten Ausführungsform der Erfindung weist der zweite Autorisierungscode ein dem Erfassungsgerät bekanntes Token mit/ohne einem Anfangsdatum und einem Enddatum (oder einem Zeitpunkt und einer Zeitdauer) als Gültigkeitszeitrum, eine Gerätetypeninformation des Servicegeräts und/oder ein Teilgeheimnis auf. Der zweite Autorisierungscode dann ist mit dem zweiten Geheimnis als Verschlüsselungs-Key verschlüsselt worden. Ein Token kann im einfachsten Fall eine mehrstellige Zahl oder ein anderer Code sein. Der Autorisierungscode wird dem Servicegerät zur Verfügung gestellt und von diesem zur Autorisierung an das Erfassungsgerät übertragen. In dem Erfassungsgerät kann der Autorisierungscode beispielsweise durch die Recheneinheit mit Hilfe des zweiten Geheimnisses entschlüsselt werden. Die Recheneinheit kann dann überprüfen, ob das Token gültig ist, das heißt mit einem im Erfassungsgerät gespeicherten Token identisch ist. Außerdem kann die Recheneinheit prüfen, ob der übermittelte Zeitbereich (Gültigkeitszeitraum) gültig ist, das heißt, das aktuelle Datum im Erfassungsgerät nach dem Anfangsdatum aber vor dem Enddatum liegt. Wenn dies der Fall ist, wird der Zugriff durch das Servicegerät gewährt.

Die Aufgabe wird außerdem durch ein Verfahren mit den Merkmalen des Anspruchs 14 gelöst. Dabei ist insbesondere vorgesehen, dass das Servicegerät in einem ersten Zugriffsmodus, insbesondere bei einer Installation des Erfassungsgeräts, einen ersten Autorisierungscode aus gerätespezifischen Daten des Erfassungsgeräts mittels eines Algorithmus in einer Recheneinheit des Servicegeräts erzeugt und zur Autorisierung an das Erfassungsgerät übersendet, das Erfassungsgerät entsprechend des ersten Zugriffsmodus den ersten Autorisierungscode unter Verwendung eines in dem Erfassungsgerät abgespeicherten ersten Geheimnisses überprüft, und das Erfassungsgerät nach einem ersten Zugriff des Servicegeräts von dem ersten Zugriffsmodus auf einen zweiten Zugriffsmodus umschaltet, so dass für spätere Zugriffe des Servicegeräts auf das Erfassungsgerät der zweite Zugriffsmodus verwendet werden muss bzw. in anderen Worten der erste Zugriffsmodus nicht mehr verwendet werden kann.

Für einen Zugriff des Servicegeräts auf das Erfassungsgerät wird entsprechend des zweiten Zugriffsmodus in dem Servicegerät ein zweiter Autorisierungscode gespeichert, und das Servicegerät übersendet den zweiten Autorisierungscode zur Autorisierung an das Erfassungsgerät. Das Erfassungsgerät überprüft entsprechend des zweiten Zugriffsmodus den zweiten Autorisierungscode unter Verwendung eines in dem Erfassungsgerät abgespeicherten zweiten Geheimnisses.

Mit dem erfindungsgemäßen Verfahren kann der Zugriff auf Erfassungsgeräte während der Inbetriebnahme besonders einfach gestaltet werden, während ein späterer Zugriff durch Unbefugte wirkungsvoll erschwert wird.

Dabei kann vorgesehen sein, dass der erste Autorisierungscode aus gerätespezifischen Daten des Erfassungsgeräts mittels des Algorithmus erzeugt wird und mit dem ersten Geheimnis überprüfbar ist, insbesondere mit diesem übereinstimmt, und dass der zweite Autorisierungscode mit dem zweiten Geheimnis verschlüsselt übertragen und durch das Erfassungsgerät entschlüsselt wird. Erfindungsgemäß umfasst das vorgeschlagene Verfahren auch sämtliche zuvor im Zusammenhang mit dem Servicegerät und/oder dem Erfassungsgerät beschriebenen Verfahrensschritte, jeweils einzeln oder in beliebiger Kombination.

Die Erfindung wird nachfolgend anhand von Ausführungsbeispielen und unter Bezugnahme auf die Figuren erläutert. Die Erfindung ist durch die anhängenden Ansprüche definiert.

Es zeigen:
- Fig. 1: ein erfindungsgemäßes Gebäudekommunikationssystem mit einem erfindungsgemäßen Erfassungsgerät, einem erfindungsgemäßen Servicegerät und einem (optionalen) zentralen Server zur Geheimnisverwaltung gemäß einer Ausführungsform der Erfindung;
- Fig. 2: das erfindungsgemäße Gebäudekommunikationssystem gemäß Fig. 1 bei einem Zugriff des Servicegeräts auf das Erfassungsgerät in einem ersten Zugriffsmodus; und
- Fig. 3: das erfindungsgemäße Gebäudekommunikationssystem gemäß Fig. 1 bei einem Zugriff des Servicegeräts auf das Erfassungsgerät in einem zweiten Zugriffsmodus.

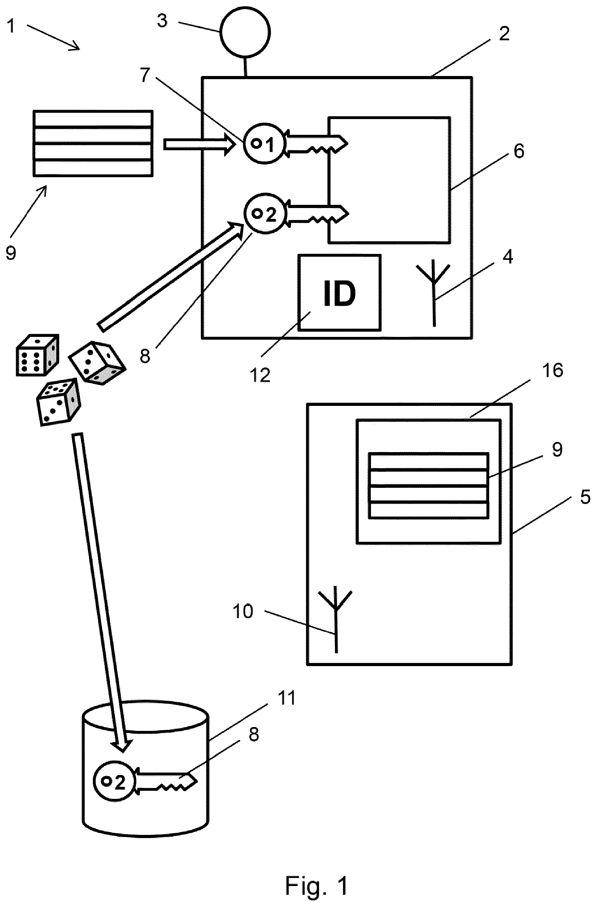

In Fig. 1 ist ein als Verbrauchserfassungssystem ausgebildetes Gebäudekommunikationssystem 1 (nachfolgend synonym auch als Verbrauchserfassungssystem bezeichnet) gemäß einer bevorzugten Ausführungsform der Erfindung dargestellt, welches ein erfindungsgemäßes Erfassungsgerät 2 (bspw. ein Verbrauchserfassungsgerät oder sonstiges Sensorgerät, wie einen Rauchwarnmelder) mit einer Messeinrichtung 3 aufweist. Bei dem Erfassungsgerät 2 kann es sich beispielsweise konkret um einen Heizkostenverteiler handeln, aber auch um einen Wärmezähler, Kältezähler, Wasserzäher oder dgl. den Verbrauch eines Verbrauchsmediums (Verbrauchsgröße) erfassenden Zähler handeln. Da häufig auch Rauchwarnmelder und/oder weitere Sensorgeräte zur Bestimmung von Raumklimadaten in lokalen Verbrauchserfassungs-Kommunikationsnetzwerken (Gebäudekommunikationssystemen) mit betrieben werden, werden auch Rauchwarnmelder, sonstige Sensor- und Kommunikationsgeräte im Rahmen dieser Beschreibung als Erfassungsgeräte bezeichnet. Nachfolgend wird ein Heizkostenverteiler als Erfassungsgerät 2 beschrieben.

In diesem Fall kann die Messeinrichtung 3 ein oder mehrere Temperatursensoren umfassen. Das Erfassungsgerät 2 weist zum Senden und Empfangen von Daten eine Kommunikationsschnittstelle 4 auf, die als Funkschnittstelle ausgebildet ist. Die Kommunikation kann vorzugsweise eine Nahbereichs-Kommunikation (also eine Kommunikationsschnittstelle mit geringer Reichweite) sein, bspw. eine proprietäre oder genormte optische Schnittstelle ) oder eine Nahfeldfunkkommunikationsschnittstelle (NFC) oder eine drahtgebundene Schnittstelle. Diese Kommunikationsschnittelle 4 kann zur Kommunikation mit einem Servicegerät 5 verwendet oder - neben der Übertragung von Messwerten - mit verwendet werden. Vorzugsweise kann die Kommunikationsschnittstelle 4 eine optische Schnittstelle sein.

So ist das Erfassungsgerät 2 dazu eingerichtet, über die Kommunikationsschnittstelle 4 Verbrauchsdaten und/oder Gerätedaten zu senden und Parameter (Daten) und Befehle zu empfangen. Das Erfassungsgerät 2 verfügt ferner über eine Echtzeituhr, die zur Speicherung der Verbrauchswerte zum Stichtag benötigt wird. Dies kann in die Recheneinheit 6 des Erfassungsgeräts mit integriert sein.

In dem Erfassungsgerät 2 sind zwei Geheimnisse 7, 8 hinterlegt.

Das erste Geheimnis 7 wurde bspw. bei der Fertigung aus gerätespezifischen Daten 12, insbesondere der Seriennummer und ggf. weiteren Informationen, mit Hilfe eines Algorithmus 9 berechnet und im Erfassungsgerät 2 hinterlegt. Die Gerätedaten sind in einer Recheneinheit 6 des Erfassungsgeräts 2 gespeichert und können auch unverschlüsselt oder am Verbrauchsgerät ablesbar sein, bspw. durch ein Typenschild oder durch sogenannte Beacon-Signale, die durch das Erfassungsgerät 2 ausgesendet werden. Die Aussendung der Beacon-Signale kann in vorgegebenen Abständen erfolgen und auf bspw. eine Zeit bei der Inbetriebnahme begrenzt sein, bis das Erfassungsgerät 2 durch ein Servicegerät in das Kommunikationsnetzwerk des Verbrauchserfassungssystems 1 integriert ist. Bspw. kann das Aussenden von Beacon-Signalen bis zu einem ersten Zugriff des Servicegeräts 5 auf das Erfassungsgeräts erfolgen.

Das zweite Geheimnis 8 wurde hingegen bei der Fertigung zufällig, d.h. mit mindestens einer später nicht mehr rekonstruierbaren Zufallszahl, erzeugt, indem eine Zufallszahl oder eine Pseudozufallszahl bei der Erzeugung verwendet wurde. Als Zufallszahl wird dabei jede digital erzeugbare und später nicht rekonstruierbare Information angesehen, die dann bspw. im Rahmen eines Algorithmus in das zweite Geheimnis 8 umgewandelt wird, bspw. ein später nicht mehr rekonstruierbarer Zeitpunkt oder dergleichen Information. Das zweite Geheimnis 8 ist ebenfalls in dem Erfassungsgerät 2 hinterlegt.

In dem Erfassungsgerät 2 ist vorzugsweise kein Algorithmus oder dergleichen implementiert, mit dem ein Geheimnis 6, 8 oder ein Autorisierungscode 13, 14, 15 erzeugbar ist. Dies trägt zur Sicherheit des Kommunikationssystems bei.

Das zweite Geheimnis 8 des Erfassungsgeräts 2 wird bei bzw. nach der Erzeugung außerdem in einer gesicherten Datenbank 11 abgelegt, in der es eindeutig mit dem Erfassungsgerät verknüpft ist, bspw. über die einmalige Geräte-ID bspw. bestehend aus Seriennummer in Verbindung mit einem Mediumscode, der Geräteversion und dem Herstellercode. In der Datendank 11 können nach der Installation von Erfassungsgeräten 2 üblicherweise auch weitere administrative Informationen, wie bspw. der Installationsort, der Eigentümer und/oder andere Daten, aufgenommen sein. Die Datenbank 11 kann beispielsweise in einem zentralen Server bei dem zuständigen, mit der Verbrauchswerterfassung betrauten Serviceprovider integriert sein und alle zweiten Geheimnisse 8 der vom Serviceprovider verwalteten Erfassungsgeräte 2 enthalten.

Das Verbrauchserfassungssystem 1 weist weiter ein Servicegerät 5 zum Lesen und Schreiben von Daten auf dem Erfassungsgerät 2 auf. Das Servicegerät 5 ist dazu mit einer zu der Kommunikationsschnittstelle 4 des Erfassungsgeräts 2 korrespondierenden Kommunikationsschnittstelle 10 ausgestattet oder kann mittels eines Tools die Kommunikation mit dem Erfassungsgerät 2 durchführen. Die Kommunikationsschnittstelle 10 ist vorzugsweise als optische Schnittstelle ausgebildet, um eine Kommunikation mit geringer Reichweite zwischen dem Servicegerät 5 und dem Erfassungsgerät 2. In dem Servicegerät 5 bzw. dessen Recheneinheit 16 ist außerdem der Algorithmus 9 implementiert, mit dem im Rahmen der Fertigung die ersten Geheimnisse 7 der Erfassungsgeräte 2 erzeugt wurden. Weder das erste Geheimnis 7 noch das zweite Geheimnis 8 sind selbst in dem Servicegerät 5 unmittelbar vorgehalten, d.h. in der Recheneinheit 16 gespeichert.

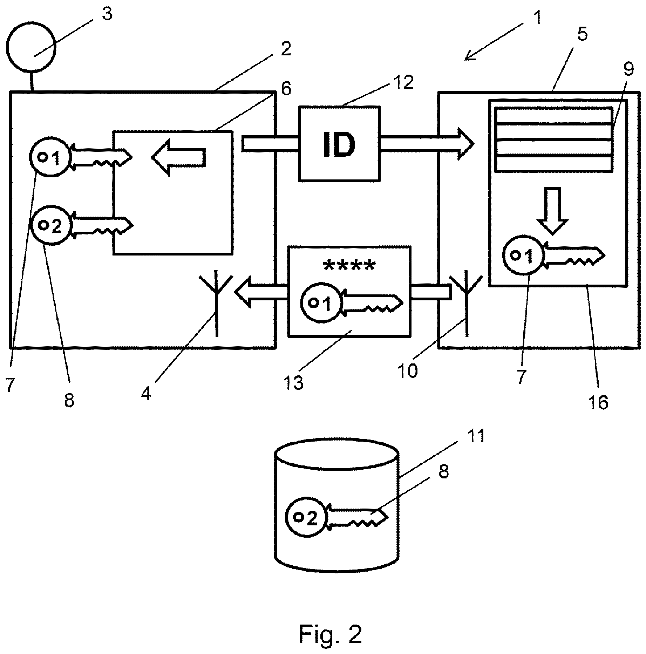

Im Rahmen der Inbetriebnahme soll nun mit dem Servicegerät 5 auf das Erfassungsgerät 2 zugegriffen werden, um die für die Verbrauchserfassung und spätere Ablesungen notwendigen Parameter zu setzen, sowie Gerätedaten zur Hinterlegung in einer Liegenschafts-Grundakte bei dem Serviceprovider, bspw. in der Datenbank 11, zu erfassen und abzuspeichern. Das Erfassungsgerät 2 befindet sich ab Werk, also vor einer Inbetriebnahme, in einem ersten Zugriffsmodus. Dies ist in Fig. 2 verdeutlicht, indem ein Zeiger der Recheneinheit 6 auf das im ersten Zugriffsmodus verwendete erste Geheimnis 7 zeigt.

Für einen Zugriff in dem ersten Zugriffsmodus werden dem Servicegerät 5 die Seriennummer und weitere gerätespezifische Informationen 12 zur Verfügung gestellt. Diese Daten können beispielsweise manuell von einem Servicetechniker in das Servicegerät eingegeben werden, oder von dem Servicegerät 5 automatisch aus dem Erfassungsgerät 2 ausgelesen werden. Dazu kann das Servicegerät 5 beispielsweise die Kommunikationsschnittstelle 10 nutzen und über die Kommunikationsschnittstelle 4 des Erfassungsgeräts 2 mit diesem kommunizieren. Das Erfassungsgerät 2 kann dann dazu eingerichtet sein, die Seriennummer und weitere gerätespezifischen Daten 12 ohne weitere Autorisierung an das Servicegerät 5 zu senden. Alternativ können die Daten beispielsweise mit einem Scanner oder einer Kamera eingelesen werden, die die auf dem Erfassungsgerät 2 aufgedruckten Daten einliest. Die Daten können dazu in Klarschrift oder beispielsweise in Form eines QR-Codes oder ähnlichem auf dem Erfassungsgerät 2 aufgedruckt oder im Display des Erfassungsgeräts 2 angezeigt sein.

Die Seriennummer und/oder weitere gerätespezifische Daten 12 werden von dem Servicegerät 5 als Eingangsparameter für den Algorithmus 9 genutzt, der auf dem Servicegerät 5 in der Recheneinheit 16 implementiert ist. Da es sich bei dem Algorithmus 9 um den Algorithmus handelt, mit dem das erste Geheimnis 7 des Erfassungsgeräts 2 erzeugt wurde, und die gleichen Eingangsparameter wie bei der Fertigung des Erfassungsgeräts 2 eingegeben werden, erzeugt der Algorithmus 9 somit im Servicegerät 5 also das erste Geheimnis 7. Aus diesem ersten Geheimnis 7 erzeugt das Servicegerät 5 nun einen ersten Autorisierungscode 13. Im einfachsten Fall wird das erste Geheimnis 7 direkt als erster Autorisierungscode 13 verwendet und über die Kommunikationsschnittstelle 10 an die Kommunikationsschnittstelle 4 des Erfassungsgeräts 2 gesendet. Alternativ kann das erste Geheimnis 7 genutzt werden um Daten, Informationen oder Befehle zu verschlüsseln, und diese verschlüsselten Daten als ersten Autorisierungscode 13 zu übermitteln.

Das Erfassungsgerät 2 empfängt nun den ersten Autorisierungscode 13 über die Kommunikationsschnittstelle 4. Da das Erfassungsgerät 2 in dem ersten Zugriffsmodus ist, wird der Autorisierungscode 13 unter Verwendung des im Erfassungsgerät 2 gespeicherten ersten Geheimnisses 7 überprüft. In dem einfachen Fall, dass das Servicegerät 5 das erste Geheimnis 7 direkt als ersten Autorisierungscode 13 übermittelt hat, muss das Erfassungsgerät 2 lediglich überprüfen, ob der erste Autorisierungscode 13 mit dem im Erfassungsgerät 2 gespeicherten ersten Geheimnis 7 übereinstimmt. Ist dies der Fall, kann das Erfassungsgerät 2 den Zugriff erlauben, indem es beispielsweise eine Verbindung mit dem Servicegerät 5 aufbaut und über diese Verbindung übermittelte Befehle ausführt.

Alternativ kann der Autorisierungscode 13 gemeinsam mit einem oder mehreren Befehlen übertragen werden und die Befehle bei erfolgreicher Überprüfung des Autorisierungscodes 13 ausgeführt werden. Wenn das Servicegerät 5 das erste Geheimnis 7 als Basisschlüssel zur Verschlüsselung genutzt hat, kann das Erfassungsgerät 2 im Gegenzug das auf dem Erfassungsgerät 2 gespeicherte erste Geheimnis 7 nutzen, um den Autorisierungscode 13 zu entschlüsseln.

Erfindungsgemäß wichtig bei diesem ersten Zugriffsmodus ist, dass das Servicegerät 5 mit einem gespeicherten Algorithmus 9 in der Lage ist, aufgrund von für das Servicegerät 5 lesbaren (oder in das Servicegerät lesbar eingebbaren) Geräteinformationen des Erfassungsgeräts 2 einen Autorisierungscode 5 zu erzeugen, der mittels des ersten, in dem Erfassungsgerät 2 gespeicherten Geheimnisses 7 überprüft werden kann, um eine Autorisierung des Servicegeräts 5 an dem Erfassungsgerät in dem ersten Zugriffsmodus zu ermöglichen. Unter lesbaren Geräteinformationen werden nicht verschlüsselte Geräteinformationen verstanden.

Damit ist bei der Inbetriebnahme ein Zugriff auf jedes beliebige Erfassungsgerät 2 möglich, ohne dass vor der Inbetriebnahme eine Zuordnung von Servicegerät 5 zu Erfassungsgerät 2 stattfinden muss. Dies vereinfacht die Inbetriebnahme und vermindert den Verwaltungsaufwand bei der Vorbereitung einer Inbetriebnahme.

Bei dem ersten Zugriff des Servicegeräts 5 auf das Erfassungsgerät 2 im Rahmen der Inbetriebnahme werden durch das Servicegerät 5 verschiedene Parameter gesetzt und Daten zur Ablage in einer Liegenschafts-Grundakte (Stammdaten) des Serviceproviders gelesen. Diese Daten werden dann nach der Inbetriebnahme bspw. in die Datenbank 11 eingespielt.

Nach dem ersten Zugriff (als durch die Recheneinheit 6 des Erfassungsgeräts feststellbare Bedingung) schaltet das Erfassungsgerät 2 von dem ersten Zugriffsmodus in einen zweiten Zugriffsmodus. Nach diesem Umschalten des Zugriffsmodus kann ein Servicegerät 5 nur noch entsprechend des zweiten Zugriffsmodus an dem Erfassungsgerät 2 autorisiert werden.

Das Erfassungsgerät 2 ist gemäß einer bevorzugten Ausbildung derart eingerichtet, dass es nach der Inbetriebnahme noch bis zum Tageswechsel in dem ersten Zugriffsmodus verbleibt. Ein Servicetechniker, der die Einrichtung der Erfassungsgeräte 2 in einer Liegenschaft übernimmt, kann so zu einem späteren Zeitpunkt nochmals mit dem Servicegerät 5 auf das Erfassungsgerät 2 zugreifen, um etwaige Änderungen an den Parametern vorzunehmen und das Gerät noch einmal neu zu installieren bzw. konfigurieren.

Am Ende des Tages der Inbetriebnahme schaltet das Erfassungsgerät 2 dann automatisch auf den zweiten Zugriffsmodus um. Besorgt sich ein Unbefugter nun auf illegalem Wege ein Servicegerät 5 und möchte mit diesem Servicegerät 5 auf das Erfassungsgerät 2 zugreifen, um die darin gesetzten Parameter zu seinen Gunsten zu manipulieren, so kann er mit dem Servicegerät 5 alleine keinen Zugriff mehr auf das Erfassungsgerät erhalten. Auch eine illegale Veröffentlichung des ersten Geheimnisses 7 und des Algorithmus 9 reicht für einen Zugriff auf das Erfassungsgerät 2 nicht mehr aus. Hierdurch wird die Sicherheit des gesamten Verbrauchserfassungssystems 1 erfindungsgemäß erheblich erhöht, weil für den Zugriff auf in einem Verbrauchserfassungssystem 1 installierte Erfassungsgeräte 2 nur durch ein anderes, zweites Geheimnis 8 zugegriffen werden kann, das wie später noch erläutert, anders und insbesondere Erfassungsgeräte-individuell abgesichert ist.

Zwar kann das Servicegerät 5 aus der Seriennummer und weiteren gerätespezifischen Daten 12 des Erfassungsgeräts 2 das erste Geheimnis 7 und den ersten Autorisierungscode 13 berechnen, jedoch ist mit diesem ersten Geheimnis 7 dann kein Zugriff mehr auf das Erfassungsgerät 2 möglich.

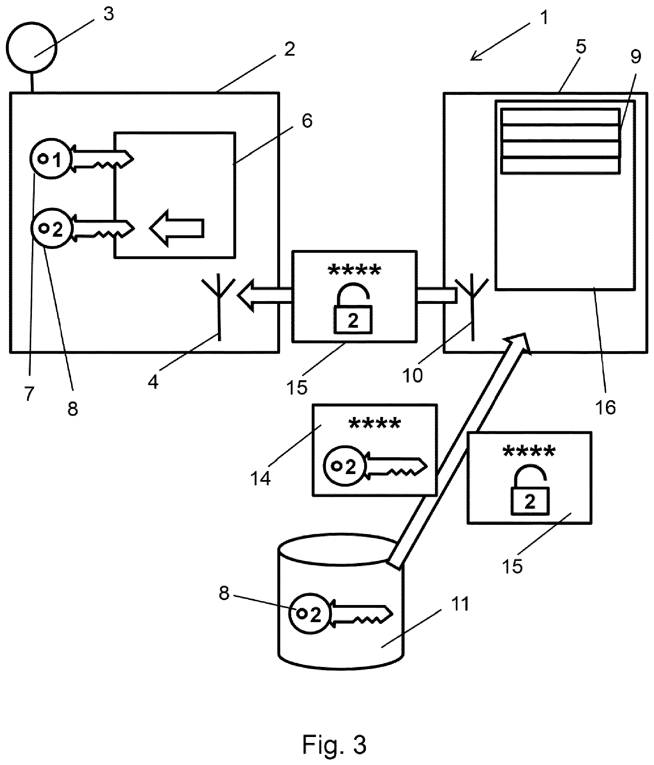

Muss ein Servicetechniker oder eine andere befugte Person zu einem späteren Zeitpunkt auf das Erfassungsgerät 2 zugreifen oder sollen im Rahmen eines Zugriffs beispielsweise bei der jährlichen Ablesung die Verbrauchsdaten aus dem Erfassungsgerät 2 ausgelesen werden, so kann sich dieser nur mit dem zweiten Zugriffsmodus seines Servicegeräts 5 autorisieren. Dieser zweite Zugriffsmodus ist in Fig. 3 schematisch dargestellt.

Ein Servicetechniker, zu denen im Rahmen dieser Offenbarung auch Ableser gezählt werden, erhält mit einem Serviceauftrag typischerweise eine Liste mit den Erfassungsgeräten 2, welche abgelesen oder anderweitig gewartet werden sollen. Dabei werden ihm außerdem von der Datenbank 11 des Serviceproviders nur die für den Service oder die Ablesung einer "beauftragten" Liegenschaft zugehörigen zweiten Autorisierungscodes 14 der Erfassungsgeräte 2 dieser Liegenschaft zur Verfügung gestellt, die dort speziell gesichert zusammen mit der eindeutigen Identifikation des Erfassungsgeräts 2 abgespeichert sind.

Im einfachsten Fall kann der zweite Autorisierungscode 14 das zweite Geheimnis 8 selbst enthalten.

Alternativ und erfindungsgemäß bevorzugt kann ein aus dem zweiten Geheimnis 8 abgeleiteter zweiter Autorisierungscode 15 übersendet werden. Aus einem abgeleiteten zweiten Autorisierungscode 15 lässt sich das zweite Geheimnis 8 nicht bestimmen; der zweite Autorisierungscode 15 lässt sich aber in Kenntnis des zweiten Geheimnisses 8 überprüfen. Beispielsweise kann ein dem Erfassungsgerät 2 bekanntes Security-Token, etwa eine mehrstellige Zahl, mit einem Anfangsdatum und einem Enddatum zu einer Zeichenfolge zusammengesetzt werden. Diese Zeichenfolge kann daraufhin mit dem zweiten Geheimnis zu einem abgeleiteten zweiten Autorisierungscode 15 verschlüsselt werden und dem Servicegerät 5 zur Verfügung gestellt werden. Im zweiten Autorisierungscode kann ein kryptografischer Hashcode beinhaltet sein oder der Autorisierungscode kann über eine kryptografische Hashfunktion abgesichert werden.

Das Servicegerät 5 übermittelt dann den zweiten (mit den zweiten Geheimnis 8 verschlüsselten) Autorisierungscode 15 mit der Kommunikationseinrichtung 10 an das Erfassungsgerät 2. Das Erfassungsgerät 2 befindet sich im zweiten Zugriffsmodus, was in Fig. 3 durch den Zeiger der Recheneinheit 6 verdeutlicht ist, der nun auf das im zweiten Zugriffsmodus verwendete zweite Geheimnis 8 zeigt.

Das Erfassungsgerät 2 empfängt den zweiten Autorisierungscode 15 über die Kommunikationsschnittstelle 4 und überprüft den Autorisierungscode 15 unter Verwendung des in dem Erfassungsgerät 2 gespeicherten zweiten Geheimnisses 8. Dazu entschlüsselt das Erfassungsgerät 2 den Autorisierungscode 15 mit dem zweiten Geheimnis 8 und erhält somit den Security-Token mit Gültigkeitszeitraum (enthaltend bspw. das Anfangsdatum sowie das Enddatum).

Das Erfassungsgerät 2 überprüft nun ob der Token mit einem auf dem Erfassungsgerät 2 gespeicherten Token übereinstimmt und ob das Datum im Erfassungsgerät zwischen Anfangsdatum und Enddatum liegt. Dies ermöglicht eine Bewertung, ob der Autorisierungscode 15 aktuell und gültig ist. Ist beides der Fall, so genehmigt das Erfassungsgerät 2 den Zugriff.

Auf ein in dem zweiten Zugriffsmodus befindliches Erfassungsgerät 2 des vorgeschlagenen Verbrauchserfassungssystems 1 ist daher ein Zugriff nur möglich, wenn ein zweites, (vorzugsweise bei der Fertigung) geräteindividuell bekanntes und auf einer später nicht mehr rekonstruierbaren Zufallszahl basierendes zweites Geheimnis 8 bei der Erstellung des zweiten Autorisierungscodes 14, 15 bekannt ist. Ein solcher zweiter Autorisierungscode 14, 15 ist besonders sicher, weil er nicht systemweit verwendet wird, sondern geräteindividuell ist.

Das erfindungsgemäße Verbrauchserfassungssystem 1 ermöglicht somit bei der Inbetriebnahme einen einfachen ad-hoc Zugriff durch ein Servicegerät 5 auf ein Erfassungsgerät 2 mit einem durch das Servicegerät 5 errechenbaren ersten Geheimnis 7. Es ist daher bei der Inbetriebnahme nicht nötig, eine Verbindung zu einem Server 11 vorzusehen, um ein geräteindividuelles Geheimnis abzurufen oder bereits vor der ersten Inbetriebnahme gerätespezifische Autorisierungscodes 14, 15 auf das Servicegerät 5 zu laden.

Durch die Umschaltung des Zugriffs auf den zweiten Zugriffsmodus wird aber verhindert, dass zu einem späteren Zeitpunkt der Zugriff mit dem ersten Geheimnis 7 genutzt wird, um eine Manipulation an dem Erfassungsgerät 2 vorzunehmen. Für den weiteren Zugriff auf das Erfassungsgerät 2 ist dann ein geräteindividuelles Geheimnis 8 notwendig, so dass die Zugriffssicherheit auf die geräteindividuell erhobenen Daten sehr groß ist.

### Bezugszeichenliste

- 1: als Verbrauchserfassungssystem ausgebildetes Gebäudekommunikationssystem
- 2: Erfassungsgerät
- 3: Messeinrichtung
- 4: Kommunikationsschnittstelle des Erfassungsgeräts
- 5: Servicegerät
- 6: Recheneinheit des Erfassungsgeräts
- 7: erstes Geheimnis
- 8: zweites Geheimnis
- 9: Algorithmus
- 10: Kommunikationsschnittstelle des Servicegeräts
- 11: Datenbank
- 12: gerätespezifische Daten
- 13: erster Autorisierungscode
- 14: zweiter Autorisierungscode
- 15: abgeleiteter zweiter Autorisierungscode
- 16: Recheneinheit des Servicegeräts

## Patentansprüche

1. Erfassungsgerät (2) mit einer Einrichtung (3) zum Erfassen einer Verbrauchsgröße und/oder einer Gebäudemessgröße und mit einer Kommunikationsschnittstelle (4) zur Kommunikation mit einem Servicegerät (5), wobei das Erfassungsgerät (2) dazu eingerichtet ist, zum Autorisieren des Servicegeräts (5) über die Kommunikationsschnittstelle (4) einen Autorisierungscode (13, 14, 15) von dem Servicegerät (5) zu empfangen, zu überprüfen und in Abhängigkeit von einem Ergebnis der Überprüfung den Zugriff des Servicegeräts (5) zu erlauben oder zu verweigern, wobei das Erfassungsgerät (2) eine Recheneinheit (6) aufweist, die dazu eingerichtet ist,
- in einem ersten Zugriffsmodus einen ersten Autorisierungscode (13) unter Verwendung eines in dem Erfassungsgerät (2) abgespeicherten ersten Geheimnisses (7) zu überprüfen, wobei das erste Geheimnis (7) aus gerätespezifischen Daten (12) des Erfassungsgeräts (2) mittels eines Algorithmus (9) erzeugbar ist,
**dadurch gekennzeichnet, dass** die Recheneinheit (6) weiter dazu eingerichtet ist,
- in einem zweiten Zugriffsmodus einen zweiten Autorisierungscode (14, 15) unter Verwendung eines in dem Erfassungsgerät (2) abgespeicherten zweiten Geheimnisses (8) zu überprüfen, wobei das zweite Geheimnis (8) auf einer Zufallszahl basiert, und
- abhängig von durch die Recheneinheit (6) feststellbaren Bedingungen zwischen dem ersten Zugriffsmodus und dem zweiten Zugriffsmodus umzuschalten, wobei die Recheneinheit (6) des Erfassungsgeräts (2) dazu eingerichtet ist, von dem ersten Zugriffsmodus auf den zweiten Zugriffsmodus umzuschalten, nachdem das Servicegerät (5) bei einer Inbetriebnahme des Erfassungsgeräts (2) ein erstes Mal mit dem ersten Zugriffsmodus auf das Erfassungsgerät zugegriffen hat.

2. Erfassungsgerät nach Anspruch 1, **dadurch gekennzeichnet, dass** die Recheneinheit (6) des Erfassungsgeräts (2) dazu eingerichtet ist, von dem ersten Zugriffsmodus auf den zweiten Zugriffsmodus umzuschalten, wenn das Erfassungsgerät (2) einen Umschaltbefehl von dem Servicegerät (5) empfängt.

3. Erfassungsgerät nach einem der vorhergehenden Ansprüche, **dadurch gekennzeichnet, dass** das Erfassungsgerät (2) dazu eingerichtet ist, durch eine Hardwaremaßnahme von dem ersten Zugriffsmodus auf den zweiten Zugriffsmodus umzuschalten.

4. Erfassungsgerät nach einem der vorhergehenden Ansprüche, **dadurch gekennzeichnet, dass** das Erfassungsgerät (2) dazu eingerichtet ist, die gerätespezifischen Daten (12) des Erfassungsgeräts (2) unverschlüsselt zu übermitteln.

5. Erfassungsgerät nach einem der vorhergehenden Ansprüche, **dadurch gekennzeichnet, dass** das zweite auf einer Zufallszahl basierende Geheimnis (8) während der Herstellung des Erfassungsgeräts (2) erzeugt ist und sowohl in der Recheneinheit (6) des Erfassungsgeräts (2) als auch in einem zentralen Server (11) gespeichert worden ist.

6. Erfassungsgerät nach einem der vorhergehenden Ansprüche, **dadurch gekennzeichnet, dass** die Recheneinheit (6) des Erfassungsgeräts (2) dazu eingerichtet ist, den zweiten Autorisierungscode (14, 15) mit dem zweiten Geheimnis (8) zu entschlüsseln.

7. Servicegerät mit einer Kommunikationsschnittstelle (10) zum Empfangen von Daten von einem und/oder Senden von Daten an ein Erfassungsgerät (2) über eine Kommunikationsschnittstelle (4) des Erfassungsgeräts (2) und mit einer Recheneinheit (16), die dazu eingerichtet ist, zur Autorisierung des Servicegeräts (5) einen Autorisierungscode (13, 14, 15) über die Kommunikationsschnittstellen (10, 4) an das Erfassungsgerät (2) zu senden, wobei
- für einen Zugriff auf das Erfassungsgerät (2) mit einem ersten Zugriffsmodus ein Algorithmus (9) zur Erzeugung eines in dem Erfassungsgerät (2) abgespeicherten ersten Geheimnisses (7) in der Recheneinheit (16) des Servicegeräts (5) implementiert ist und die Recheneinheit (16) des Servicegeräts (5) dazu eingerichtet ist, aus gerätespezifischen Daten (12) des Erfassungsgeräts (2) mittels des Algorithmus (9) einen ersten Autorisierungscode (13) zu erzeugen und an das Erfassungsgerät (2) zu senden,
**dadurch gekennzeichnet, dass**
- für einen Zugriff auf das Erfassungsgerät (2) mit einem zweiten Zugriffsmodus ein zweiter Autorisierungscode (14, 15) in der Recheneinheit (16) des Servicegeräts (5) speicherbar ist, das Servicegerät (5) dazu eingerichtet ist, den zweiten Autorisierungscode (14, 15) von einem zentralen Server zu laden, in dem zu jedem über gerätespezifische Daten identifizierbaren Erfassungsgerät der zweite Autorisierungscode (14, 15) gespeichert ist, und wobei die Recheneinheit (16) des Servicegeräts (5) dann dazu eingerichtet ist, den gespeicherten zweiten Autorisierungscode (14, 15) an das Erfassungsgerät (2) zu senden.

8. Servicegerät nach Anspruch 7, **dadurch gekennzeichnet, dass** die Recheneinheit (16) des Servicegeräts (5) eine Erfassungseinrichtung aufweist, welche dazu eingerichtet ist, die unverschlüsselt übermittelten gerätespezifischen Daten (12) des Erfassungsgeräts (2) in die Recheneinheit (16) einzugeben.

9. Erfassungsgerät nach einem der Ansprüche 1 bis 6 oder Servicegerät nach einem der Ansprüche 7 oder 8, **dadurch gekennzeichnet, dass** der zweite Autorisierungscode (15) aus dem zweiten Geheimnis (8) abgeleitet ist, wobei das zweite Geheimnis (8) in dem zweiten Autorisierungscode (15) nicht enthalten ist und/oder aus diesem bestimmt werden kann.

10. Erfassungsgerät oder Servicegerät nach Anspruch 9, **dadurch gekennzeichnet, dass** der zweite Autorisierungscode (15) ein dem Erfassungsgerät (2) bekanntes Token, einen Gültigkeitszeitraum, eine Gerätetypidentifikation des Servicegeräts und/oder ein Teilgeheimnis enthält und mit dem zweiten Geheimnis (8) verschlüsselt ist.

11. Gebäudekommunikationssystem mit mindestens einem Erfassungsgerät (2) nach einem der Ansprüche 1 bis 6, 9 oder 10 und mit mindestens einem Servicegerät (5) nach einem der Ansprüche 7 bis 10.

12. Verfahren zur Autorisierung eines Servicegeräts (5) nach einem der Ansprüche 7 bis 10 zum Zugriff auf ein Erfassungsgerät (2) nach einem der Ansprüche 1 bis 6, 9 oder 10, wobei
- das Servicegerät (5) einen Autorisierungscode (13, 14, 15) zur Autorisierung an das Erfassungsgerät (2) übersendet, das Erfassungsgerät (2) den Autorisierungscode (13, 14, 15) überprüft und in Abhängigkeit von einem Ergebnis der Überprüfung den Zugriff des Servicegeräts (5) auf das Erfassungsgeräts (2) erlaubt oder verweigert,
- das Servicegerät (5) in einem ersten Zugriffsmodus einen ersten Autorisierungscode (13) aus gerätespezifischen Daten (12) des Erfassungsgeräts (2) mittels eines Algorithmus (9) in einer Recheneinheit (16) des Servicegeräts (5) erzeugt und zur Autorisierung an das Erfassungsgerät (2) übersendet,
- das Erfassungsgerät (2) entsprechend des ersten Zugriffsmodus den ersten Autorisierungscode (13) unter Verwendung eines in dem Erfassungsgerät (2) abgespeicherten ersten Geheimnisses (7) überprüft,
**dadurch gekennzeichnet, dass**
- das Erfassungsgerät (2) nach einem ersten Zugriff des Servicegeräts von dem ersten Zugriffsmodus auf einen zweiten Zugriffsmodus umschaltet, so dass für spätere Zugriffe des Servicegeräts auf das Erfassungsgerät der zweite Zugriffsmodus verwendet werden muss,
- für einen Zugriff entsprechend des zweiten Zugriffsmodus in dem Servicegerät (5) ein zweiter Autorisierungscode (14, 15) gespeichert wird und das Servicegerät (5) den zweiten Autorisierungscode (14, 15) zur Autorisierung an das Erfassungsgerät (2) übersendet, und
- das Erfassungsgerät (2) entsprechend des zweiten Zugriffsmodus den zweiten Autorisierungscode (14, 15) unter Verwendung eines in dem Erfassungsgerät (2) abgespeicherten zweiten Geheimnisses (8) überprüft.

13. Verfahren nach Anspruch 12, **dadurch gekennzeichnet, dass**
- der erste Autorisierungscode (13) aus gerätespezifischen Daten (12) des Erfassungsgeräts (2) mittels des Algorithmus (9) erzeugt wird und mit dem ersten Geheimnis überprüfbar ist und
- der zweite Autorisierungscode (14, 15) mit dem zweiten Geheimnis (8) verschlüsselt übertragen und durch das Erfassungsgerät (2) entschlüsselt wird.

## Claims

1. Acquisition device (2) with a device (3) for acquiring a consumption quantity and/or a building measurement quantity and with a communication interface (4) for communication with a service device (5), wherein the acquisition device (2) is configured to receive an authorization code (13, 14, 15) from the service device (5) via the communication interface (4) for authorizing the service device (5), to verify it and, depending on a result of the verification, to allow or deny access of the service device (5), wherein the acquisition device (2) has a computing unit (6) which is configured to
- in a first access mode, verify a first authorization code (13) using a first secret (7) stored in the acquisition device (2), wherein the first secret (7) is generable from device-specific data (12) of the acquisition device (2) by means of an algorithm (9),
**characterized in that** the computing unit (6) is further configured to
- in a second access mode, verify a second authorization code (14, 15) using a second secret (8) stored in the acquisition device (2), wherein the second secret (8) is based on a random number, and
- switch between the first access mode and the second access mode depending on conditions determinable by the computing unit (6), wherein the computing unit (6) of the acquisition device (2) is configured to switch from the first access mode to the second access mode after the service device (5) has accessed the acquisition device for the first time with the first access mode during commissioning of the acquisition device (2).

2. Acquisition device according to claim 1, **characterized in that** the computing unit (6) of the acquisition device (2) is configured to switch from the first access mode to the second access mode when the acquisition device (2) receives a switching command from the service device (5).

3. Acquisition device according to one of the preceding claims, **characterized in that** the acquisition device (2) is configured to switch from the first access mode to the second access mode by means of a hardware measure.

4. Acquisition device according to one of the preceding claims, **characterized in that** the acquisition device (2) is configured to transmit the device-specific data (12) of the acquisition device (2) unencrypted.

5. Acquisition device according to one of the preceding claims, **characterized in that** the second secret (8) based on a random number is generated during manufacturing of the acquisition device (2) and has been stored both in the computing unit (6) of the acquisition device (2) and in a central server (11).

6. Acquisition device according to one of the preceding claims, **characterized in that** the computing unit (6) of the acquisition device (2) is configured to decrypt the second authorization code (14, 15) with the second secret (8).

7. Service device having a communication interface (10) for receiving data from and/or sending data to an acquisition device (2) via a communication interface (4) of the acquisition device (2) and having a computing unit (16) configured to send, for authorizing the service device (5), an authorization code (13, 14, 15) to the acquisition device (2) via the communication interfaces (10, 4), wherein
- for access to the acquisition device (2) with a first access mode, an algorithm (9) for generating a first secret (7) stored in the acquisition device (2) is implemented in the computing unit (16) of the service device (5), and the computing unit (16) of the service device (5) is configured to generate a first authorization code (13) from device-specific data (12) of the acquisition device (2) by means of the algorithm (9) and to send it to the acquisition device (2),
**characterized in that**
- for access to the acquisition device (2) with a second access mode, a second authorization code (14, 15) is storable in the computing unit (16) of the service device (5), the service device (5) is configured to load the second authorization code (14, 15) from a central server in which the second authorization code (14, 15) is stored for each acquisition device identifiable via device-specific data, and wherein the computing unit (16) of the service device (5) is then configured to send the stored second authorization code (14, 15) to the acquisition device (2).

8. Service device according to claim 7, **characterized in that** the computing unit (16) of the service device (5) has an input device which is configured to enter the unencrypted transmitted device-specific data (12) of the acquisition device (2) into the computing unit (16).

9. Acquisition device according to one of claims 1 to 6 or service device according to one of claims 7 or 8, **characterized in that** the second authorization code (15) is derived from the second secret (8), wherein the second secret (8) is not contained in the second authorization code (15) and/or can be determined from it.

10. Acquisition device or service device according to claim 9, **characterized in that** the second authorization code (15) contains a token known to the acquisition device (2), a validity period, a device type identification of the service device and/or a partial secret and is encrypted with the second secret (8).

11. Building communication system with at least one acquisition device (2) according to one of claims 1 to 6, 9 or 10 and with at least one service device (5) according to one of claims 7 to 10.

12. Method for authorizing a service device (5) according to one of claims 7 to 10 to access an acquisition device (2) according to one of claims 1 to 6, 9 or 10, wherein
- the service device (5) sends an authorization code (13, 14, 15) to the acquisition device (2) for authorization, the acquisition device (2) verifies the authorization code (13, 14, 15) and, depending on a result of the verification, allows or denies access of the service device (5) to the acquisition device (2),
- the service device (5) generates, in a first access mode, a first authorization code (13) from device-specific data (12) of the acquisition device (2) by means of an algorithm (9) in a computing unit (16) of the service device (5) and sends it to the acquisition device (2) for authorization,
- the acquisition device (2) verifies, in accordance with the first access mode, the first authorization code (13) using a first secret (7) stored in the acquisition device (2),
**characterized in that**
- the acquisition device (2) switches, after a first access by the service device, from the first access mode to a second access mode, so that the second access mode must be used for later accesses of the service device to the acquisition device,
- for an access in accordance with the second access mode, a second authorization code (14, 15) is stored in the service device (5), and the service device (5) sends the second authorization code (14, 15) to the acquisition device (2) for authorization, and
- the acquisition device (2) verifies, in accordance with the second access mode, the second authorization code (14, 15) using a second secret (8) stored in the acquisition device (2).

13. Method according to claim 12, **characterized in that**
- the first authorization code (13) is generated from device-specific data (12) of the acquisition device (2) by means of the algorithm (9) and is verifiable with the first secret, and
- the second authorization code (14, 15) is transmitted encrypted with the second secret (8) and is decrypted by the acquisition device (2).

## Revendications

1. Dispositif d'acquisition (2) comportant un dispositif (3) destiné à acquérir une quantité de consommation et/ou une grandeur de mesure du bâtiment et une interface de communication (4) destinée à la communication avec un dispositif de service (5), le dispositif d'acquisition (2) étant configuré pour recevoir un code d'autorisation (13, 14, 15) du dispositif de service (5) via l'interface de communication (4) afin d'autoriser le dispositif de service (5), pour le vérifier et, en fonction du résultat de la vérification, pour autoriser ou refuser l'accès du dispositif de service (5), le dispositif d'acquisition (2) comportant une unité de calcul (6) qui est configurée pour
- dans un premier mode d'accès, vérifier un premier code d'autorisation (13) à l'aide d'un premier secret (7) stocké dans le dispositif d'acquisition (2), le premier secret (7) étant générable à partir de données spécifiques au dispositif (12) du dispositif d'acquisition (2) au moyen d'un algorithme (9),
**caractérisé en ce que** l'unité de calcul (6) est en outre configurée pour
- dans un second mode d'accès, vérifier un second code d'autorisation (14, 15) à l'aide d'un second secret (8) stocké dans le dispositif d'acquisition (2), le second secret (8) étant basé sur un nombre aléatoire, et
- basculer entre le premier mode d'accès et le second mode d'accès en fonction de conditions déterminables par l'unité de calcul (6), l'unité de calcul (6) du dispositif d'acquisition (2) étant configurée pour basculer du premier mode d'accès au second mode d'accès après que le dispositif de service (5) a accédé au dispositif d'acquisition pour la première fois avec le premier mode d'accès lors de la mise en service du dispositif d'acquisition (2).

2. Dispositif d'acquisition selon la revendication 1, **caractérisé en ce que** l'unité de calcul (6) du dispositif d'acquisition (2) est configurée pour basculer du premier mode d'accès au second mode d'accès lorsque le dispositif d'acquisition (2) reçoit une commande de commutation du dispositif de service (5).

3. Dispositif d'acquisition selon l'une des revendications précédentes, **caractérisé en ce que** le dispositif d'acquisition (2) est configuré pour basculer du premier mode d'accès au second mode d'accès au moyen d'une mesure matérielle.

4. Dispositif d'acquisition selon l'une des revendications précédentes, **caractérisé en ce que** le dispositif d'acquisition (2) est configuré pour transmettre non chiffrées les données spécifiques au dispositif (12) du dispositif d'acquisition (2).

5. Dispositif d'acquisition selon l'une des revendications précédentes, **caractérisé en ce que** le second secret (8) basé sur un nombre aléatoire est généré lors de la fabrication du dispositif d'acquisition (2) et a été stocké à la fois dans l'unité de calcul (6) du dispositif d'acquisition (2) et dans un serveur central (11).

6. Dispositif d'acquisition selon l'une des revendications précédentes, **caractérisé en ce que** l'unité de calcul (6) du dispositif d'acquisition (2) est configurée pour déchiffrer le second code d'autorisation (14, 15) avec le second secret (8).

7. Dispositif de service comportant une interface de communication (10) destinée à recevoir des données d'un dispositif d'acquisition (2) et/ou à envoyer des données à un dispositif d'acquisition (2) via une interface de communication (4) du dispositif d'acquisition (2), et comportant une unité de calcul (16) configurée pour envoyer au dispositif d'acquisition (2), afin d'autoriser le dispositif de service (5), un code d'autorisation (13, 14, 15) via les interfaces de communication (10, 4), dans lequel
- pour un accès au dispositif d'acquisition (2) avec un premier mode d'accès, un algorithme (9) destiné à générer un premier secret (7) stocké dans le dispositif d'acquisition (2) est implémenté dans l'unité de calcul (16) du dispositif de service (5), et l'unité de calcul (16) du dispositif de service (5) est configurée pour générer un premier code d'autorisation (13) à partir de données spécifiques au dispositif (12) du dispositif d'acquisition (2) au moyen de l'algorithme (9) et pour l'envoyer au dispositif d'acquisition (2),
**caractérisé en ce que**
- pour un accès au dispositif d'acquisition (2) avec un second mode d'accès, un second code d'autorisation (14, 15) est stockable dans l'unité de calcul (16) du dispositif de service (5), le dispositif de service (5) est configuré pour charger le second code d'autorisation (14, 15) depuis un serveur central dans lequel le second code d'autorisation (14, 15) est stocké pour chaque dispositif d'acquisition identifiable au moyen de données spécifiques au dispositif, et dans lequel l'unité de calcul (16) du dispositif de service (5) est ensuite configurée pour envoyer au dispositif d'acquisition (2) le second code d'autorisation (14, 15) stocké.

8. Dispositif de service selon la revendication 7, **caractérisé en ce que** l'unité de calcul (16) du dispositif de service (5) comporte un dispositif de saisie configuré pour saisir dans l'unité de calcul (16) les données spécifiques au dispositif (12) du dispositif d'acquisition (2) transmises non chiffrées.

9. Dispositif d'acquisition selon l'une des revendications 1 à 6 ou dispositif de service selon l'une des revendications 7 ou 8, **caractérisé en ce que** le second code d'autorisation (15) est dérivé du second secret (8), dans lequel le second secret (8) n'est pas contenu dans le second code d'autorisation (15) et/ou est déterminable à partir de celui-ci.

10. Dispositif d'acquisition ou dispositif de service selon la revendication 9, **caractérisé en ce que** le second code d'autorisation (15) contient un token connu du dispositif d'acquisition (2), une période de validité, une identification du type de dispositif du dispositif de service et/ou un secret partiel et est chiffré avec le second secret (8).

11. Système de communication du bâtiment comportant au moins un dispositif d'acquisition (2) selon l'une des revendications 1 à 6, 9 ou 10 et au moins un dispositif de service (5) selon l'une des revendications 7 à 10.

12. Procédé d'autorisation d'un dispositif de service (5) selon l'une des revendications 7 à 10 pour accéder à un dispositif d'acquisition (2) selon l'une des revendications 1 à 6, 9 ou 10, dans lequel
- le dispositif de service (5) envoie un code d'autorisation (13, 14, 15) au dispositif d'acquisition (2) pour autorisation, le dispositif d'acquisition (2) vérifie le code d'autorisation (13, 14, 15) et, en fonction du résultat de la vérification, autorise ou refuse l'accès du dispositif de service (5) au dispositif d'acquisition (2),
- le dispositif de service (5), dans un premier mode d'accès, génère un premier code d'autorisation (13) à partir de données spécifiques au dispositif (12) du dispositif d'acquisition (2) au moyen d'un algorithme (9) dans une unité de calcul (16) du dispositif de service (5) et l'envoie au dispositif d'acquisition (2) pour autorisation,
- le dispositif d'acquisition (2) vérifie, conformément au premier mode d'accès, le premier code d'autorisation (13) à l'aide d'un premier secret (7) stocké dans le dispositif d'acquisition (2),
**caractérisé en ce que**
- le dispositif d'acquisition (2) bascule, après un premier accès du dispositif de service, du premier mode d'accès à un second mode d'accès, de sorte que le second mode d'accès doit être utilisé pour les accès ultérieurs du dispositif de service au dispositif d'acquisition,
- pour un accès conforme au second mode d'accès, un second code d'autorisation (14, 15) est stocké dans le dispositif de service (5), et le dispositif de service (5) envoie le second code d'autorisation (14, 15) au dispositif d'acquisition (2) pour autorisation, et
- le dispositif d'acquisition (2) vérifie, conformément au second mode d'accès, le second code d'autorisation (14, 15) à l'aide d'un second secret (8) stocké dans le dispositif d'acquisition (2).

13. Procédé selon la revendication 12, **caractérisé en ce que**
- le premier code d'autorisation (13) est généré à partir de données spécifiques au dispositif (12) du dispositif d'acquisition (2) au moyen de l'algorithme (9) et est vérifiable à l'aide du premier secret, et
- le second code d'autorisation (14, 15) est transmis chiffré avec le second secret (8) et est déchiffré par le dispositif d'acquisition (2).
